# EUROPEAN PATENT APPLICATION

(11) **EP 4 614 312 A1**
(43) Date of publication of application: **10.09.2025**
(21) Application number: 23890206.8
(22) Date of filing: 29.06.2023
(51) Int. Cl.: G06F 8/41

(54) **CLOUD SERVICE-BASED CODE GENERATION METHOD AND DEVICE**

(30) Priority: 15.11.2022 CN 202211430214; 13.12.2022 CN 202211600744
(71) Applicant: Huawei Cloud Computing Technologies Co., Ltd., Guiyang, Guizhou 550025 (CN)
(72) Inventor: SHEN, Bo, Guiyang, Guizhou 550025 (CN); ZHANG, Jiaxin, Guiyang, Guizhou 550025 (CN); LIANG, Guangtai, Guiyang, Guizhou 550025 (CN); WANG, Qianxiang, Guiyang, Guizhou 550025 (CN)
(74) Representative: Goddar, Heinz J.
(86) International application number: PCT/CN2023/103999
(87) International publication number: WO 2024/103764

(57) **Abstract**

This application relates to the field of software development technologies, and discloses a cloud service-based code generation method and apparatus. The method includes: receiving a code generation request, where the code generation request is used to request to generate first executable code for implementing a first method in a repository; obtaining, from information of the repository based on the code generation request, first context information needed for generating the first executable code; and generating the first executable code based on the first context information and the code generation request. In this application, a repository-level context is taken into consideration during code generation, to help improve a generation effect of the code generation.

## Description

This application claims priority to Chinese Patent Application No. 202211430214.3, filed on November 15, 2022 and entitled "CODE GENERATION METHOD AND APPARATUS", and priority to Chinese Patent Application No. 202211600744.8, filed on December 13, 2022 and entitled "CLOUD SERVICE-BASED CODE GENERATION METHOD AND APPARATUS", both of which are incorporated herein by reference in their entireties.

### TECHNICAL FIELD

This application relates to the field of software development technologies, and in particular, to a cloud service-based code generation method and apparatus.

### BACKGROUND

A code generation (code generation) or program synthesis (program synthesis) technology is always a hot topic in academic research in the software engineering (software engineering, SE) and artificial intelligence (artificial intelligence, AI) fields, and attracts much attention from the industry due to its huge business value. Over the past two years, thanks to achievements of artificial intelligence research in natural language processing (natural language processing, NLP) and programming language processing (programming language processing PLP) fields, combination of technologies in the two fields gradually pushes a code generation-related technology to practical application from academic research. Currently, an artificial intelligence-based code generation tool, as an auxiliary tool for improving software development efficiency, has become one of most popular implemented artificial intelligence applications.

Currently, the code generation technology is mainly used for line-level code completion (code completion) and generation (code generation). Compared with programming environments and tools that have been developed for many years, the code generation technology is still in an initial stage, and technologies and product forms thereof still need to be continuously improved in practice.

### SUMMARY

This application provides a cloud service-based code generation method and apparatus. In this application, a repository-level context is taken into consideration during code generation, to help improve a generation effect of the code generation. Technical solutions provided in this application are as follows.

According to a first aspect, this application provides a cloud service-based code generation method. The method may be performed by a cloud platform. The method includes: receiving a code generation request, where the code generation request is used to request to generate first executable code for implementing a first method in a repository; obtaining, from information of the repository based on the code generation request, first context information needed for generating the first executable code; and generating the first executable code based on the first context information and the code generation request.

In the cloud service-based code generation method provided in this application, after the code generation request is received, the first context information needed for generating the first executable code can be obtained from the information of the repository based on the code generation request. Then, the first executable code is generated based on the first context information and the code generation request. In the cloud service-based code generation method, the first context information needed for generating the first executable code needs to be first obtained from the information of the repository. The first context information includes repository-level context information from the entire repository, and can reflect logical structure diagrams of code and the repository. In this way, more background knowledge needed by human developers during actual programming and more overall logic of the repository can be used in a code generation process. Therefore, a code generation capability is improved. This helps improve actual use experience of a code generation technology.

In this application, a computing device may generate executable code of a to-be-generated first method based on first context information of the first method. In addition, it can be learned from the foregoing descriptions that hierarchical units related to the repository are sequentially a repository, a code module, a code package, a class, and a method in descending order. In this case, the first context information may be obtained from different hierarchical units based on different application requirements. Therefore, a user may send a scope indication to the computing device via a client, to indicate an obtaining scope of the first context information. In this case, the method further includes: receiving a scope indication, where the scope indication indicates an obtaining scope of the first context information. Correspondingly, the obtaining, from information of the repository based on the code generation request, first context information needed for generating the first executable code includes: when the scope indication indicates that the obtaining scope of the first context information is the repository, obtaining the first context information from the information of the repository based on the code generation request.

When the scope indication indicates that the obtaining scope of the first context information is the repository, the computing device can obtain the first context information from the entire repository. In this way, when generating the first executable code, the computing device can consider the logical structure diagrams of the code and the repository. This helps improve the code generation capability.

The user may indicate, based on a requirement, whether to view the obtained first context information. When the user needs or does not need to view the obtained first context information, the user may perform a corresponding operation to trigger a preview indication, and convey a requirement of the user to the computing device through the preview indication. The method further includes: receiving a preview indication, where the preview indication indicates whether to preview the first context information; when the preview indication indicates to preview the first context information, displaying the first context information; and receiving an accept indication indicating that the first context information is accepted. Correspondingly, the generating the first executable code based on the first context information and the code generation request includes: after receiving the accept indication, generating the first executable code based on the first context information and the code generation request.

Executable code for implementing a method is usually stored in a source code file. Therefore, the first context information may include content in a source code file to which the first method belongs, or may include content outside the source code file to which the first method belongs. In this case, when the first context information is obtained, the first context information may be separately obtained from the source code file to which the first method belongs and from outside the source code file. In an implementation, the obtaining first context information needed for generating the first executable code includes: performing processing such as context expansion outside the file and code reorganization inside the file, and obtaining the first context information based on a processing result.

In an implementation, an implementation process of performing the code reorganization inside the file, and obtaining the first context information based on the reorganization result includes: the obtaining, from information of the repository based on the code generation request, first context information needed for generating the first executable code includes: obtaining, from a file of the repository based on the code generation request, a source code file to which the first method belongs; obtaining, from the source code file, following information whose writing location is posterior to the first method; adjusting the writing location of the following information to be prior to the first method, so that the following information becomes preceding information of the first method after the location adjustment; and obtaining the first context information based on the preceding information of the first method.

In an implementation, an implementation process of performing the context expansion outside the file and obtaining the first context information based on the expansion result includes: obtaining, from a file of the repository based on the code generation request, a source code file to which the first method belongs; obtaining, from the information of the repository, external information that is used by the source code file and that is outside the source code file; supplementing the external information to the source code file; and obtaining the first context information based on a supplemented source code file.

Optionally, the method may further include: obtaining, from the information of the repository, a permission scope in which the first method has permission for access. Correspondingly, the obtaining, from the information of the repository, external information that is used by the source code file and that is outside the source code file includes: obtaining the external information within the permission scope. The external information is obtained within the permission scope in which the first method has the permission for access, and content that the first method has no permission to access is not introduced into the first method. This ensures efficiency and effectiveness of the obtained first context information.

In an implementation, the obtaining a permission scope in which the first method has permission for access includes: obtaining the permission scope based on at least one of a location of the first method in the repository, access control permission of a target class to which the first method belongs, and a hierarchy and a reference relationship that are of the target class. The location of the first method in the repository may be represented by a generation point. The hierarchy of the target class represents a hierarchy of the target class in the hierarchical units of the repository. The reference relationship of the target class represents content referenced by the target class. The access control permission of the target class may be set by a developer, and is used to limit access control permission of executable code in the target class.

Optionally, before the generating the first executable code based on the first context information and the code generation request, the method further includes: removing target information from the first context information to obtain updated first context information, where the target information includes one or more of the following: a code comment, a variable assignment, a method body, and information indicating code underlying logic.

In this way, information irrelevant to generation of the first executable code, privacy-related information, and/or sensitive information can be deleted from the first context information, so that related content that reflects signature information and a hierarchical structure that are of content in the first context is retained in the first context. The first context information can be compressed, so that context information including more valuable content can be input at a same input length. In addition, availability of generated code, user privacy, and security of the code can be further ensured.

In an implementation, the user may determine, based on an application requirement, whether the target information in the first context information needs to be removed. In this case, the method further includes: receiving a removal indication, where the removal indication indicates whether to remove the target information from the first context information. Correspondingly, the removing target information from the first context information to obtain updated first context information includes: when the removal indication indicates to remove the target information from the first context information, removing the target information from the first context information to obtain the updated first context information.

In an implementation, the removal indication may indicate that a removal operation needs to be performed. When receiving the removal indication indicating to perform the removal operation, the computing device may remove information according to a preset policy, and the user does not need to indicate a specific type of the target information that needs to be removed, that is, does not need to indicate whether the target information is implementation details of an invoked method, a variable assignment, or sensitive information included in the code. In another implementation, the removal indication may not only indicate that a removal operation needs to be performed, but also indicate a specific type of the target information that needs to be removed.

When the first executable code is generated by using a pre-trained model, before the first executable code is generated based on the first context information and the code generation request, abstraction processing may be performed on the first context information, to abstract the first context information as an interface declaration form that conforms to syntax, so as to reuse programming language syntax knowledge learned by the pre-trained model in a training process. In this case, before the generating the first executable code based on the first context information and the code generation request, the method further includes: abstracting the first context information as an interface declaration form, to obtain the updated first context information.

When the first executable code is generated by using a code generation model, because an input length of the code generation model is limited, after the first context information is obtained, multiple pieces of content in the first context information may be further sorted, to input the multiple pieces of content in the first context information into the code generation model in a sorted sequence. This reduces a probability that content that is closely related to the first method is truncated due to the input length limitation when the content is input into the code generation model, so that context information of high importance can be input into the code generation model. In this case, before the generating the first executable code based on the first context information and the code generation request, the method further includes: obtaining correlation between multiple pieces of content in the first context information and the first method; and sorting the multiple pieces of content based on the correlation corresponding to the multiple pieces of content, to obtain the updated first context information.

In an implementation, the sorting the multiple pieces of content based on the correlation corresponding to the multiple pieces of content includes: arranging the multiple pieces of content to be prior to a task description of the first method, where a distance between any piece of content and the task description is inversely correlated with the correlation corresponding to the content.

Optionally, there are multiple implementations for obtaining the correlation between the multiple pieces of content in the first context information and the first method. The following several implementations are used as examples below for description. In addition, the implementation may include one or a combination of the following: obtaining a first similarity between an identifier of each piece of content and related information of the first method, where the first similarity is positively correlated with the correlation; obtaining a distance between each piece of content and a hierarchy of the first method in the repository, where the distance is inversely correlated with the correlation; and obtaining a second similarity between each piece of content and context information invoked by associated content of the first method, where the second similarity is positively correlated with the correlation, and the associated content of the first method includes one or more of the following: an association class of the target class to which the first method belongs, and another method in the target class.

The identifier includes one or more of the following: a variable name, a method name, a package name, a class name, and a constant name. The related information includes one or more of the following: a method description, a method name, a return type, and a parameter type.

In an implementation, before the obtaining, from information of the repository based on the code generation request, first context information needed for generating the first executable code, the method further includes: generating a logical structure diagram of the repository, where the logical structure diagram indicates an association relationship between content in the repository. Correspondingly, the obtaining, from information of the repository based on the code generation request, first context information needed for generating the first executable code includes: analyzing the logical structure diagram based on the code generation request, and obtaining, from the information of the repository, the first context information needed for generating the first executable code.

Optionally, the generating the first executable code based on the first context information and the code generation request includes: inputting the first context information and the code generation request into the pre-trained model, to obtain the first executable code output by the pre-trained model.

In this case, before the generating the first executable code based on the first context information and the code generation request, the method further includes: obtaining second executable code for implementing a second method in a successfully compiled repository; obtaining second context information of the second executable code; and training a to-be-trained model by using the second context information as an input of the to-be-trained model and using the second executable code as an expected output of the to-be-trained model, to obtain the pre-trained model.

Optionally, when the second method has a method comment, the input of the to-be-trained model may further include the method comment. Similarly, when the second method has a method signature, the input of the to-be-trained model may further include the method signature. The method signature indicates a use manner of the method.

In an implementation, the obtaining second executable code for implementing a second method in a successfully compiled repository includes: obtaining all second methods in the successfully compiled repository; sifting all the second methods to obtain a sifted second method, where the sifted second method is used to express arithmetic logic; and obtaining second executable code for implementing the sifted second method.

A second method that fails to pass the sifting has one or more of the following features: a method body of the second method is empty, the second method has a special purpose, and the method body of the second method does not include an operation expression. For example, the special purpose includes one or more of the following: obtaining, setting, constructing, and returning.

Optionally, the context information is related information needed for executing a task. In an implementation, the context information includes one or more of the following: a class, functions of a variable and a method, access permission, and an invocation manner that are defined. The first context information is obtained, and the first executable code is generated based on the first context information. In this way, the class, the functions of the variable and the method, the access permission, and the invocation manner that are defined in the repository can be reused. This simplifies complexity of generating the first executable code, and helps improve the code generation capability.

According to a second aspect, this application provides a cloud service-based code generation apparatus, disposed on a cloud platform. The cloud service-based code generation apparatus includes: a receiving module, configured to receive a code generation request, where the code generation request is used to request to generate first executable code for implementing a first method in a repository; a first obtaining module, configured to obtain, from information of the repository based on the code generation request, first context information needed for generating the first executable code; and a generation module, configured to generate the first executable code based on the first context information and the code generation request.

Optionally, the receiving module is further configured to receive a scope indication, where the scope indication indicates an obtaining scope of the first context information; and the first obtaining module is specifically configured to: when the scope indication indicates that the obtaining scope of the first context information is the repository, obtain the first context information from the information of the repository based on the code generation request.

Optionally, the receiving module is further configured to receive a preview indication, where the preview indication indicates whether to preview the first context information. The cloud service-based code generation apparatus further includes a display module, configured to: when the preview indication indicates to preview the first context information, display the first context information. The receiving module is further configured to receive an accept indication indicating that the first context information is accepted. The generation module is specifically configured to: after the accept indication is received, generate the first executable code based on the first context information and the code generation request.

Optionally, the first obtaining module is specifically configured to: obtain, from a file of the repository based on the code generation request, a source code file to which the first method belongs; obtain, from the information of the repository, external information that is used by the source code file and that is outside the source code file; supplement the external information to the source code file; and obtain the first context information based on a supplemented source code file.

Optionally, the first obtaining module is specifically configured to: obtain, from the information of the repository, a permission scope in which the first method has permission for access; and obtain the external information within the permission scope.

Optionally, the first obtaining module is specifically configured to obtain the permission scope based on at least one of a location of the first method in the repository, access control permission of a target class to which the first method belongs, and a hierarchy and a reference relationship that are of the target class.

Optionally, the first obtaining module is further configured to remove target information from the first context information to obtain updated first context information. The target information includes one or more of the following: a code comment, a variable assignment, a method body, and information indicating code underlying logic.

Optionally, the receiving module is further configured to receive a removal instruction, where the removal instruction indicates whether to remove the target information from the first context information. The first obtaining module is specifically configured to: when the removal instruction indicates to remove the target information from the first context information, remove the target information from the first context information, to obtain the updated first context information.

Optionally, the first obtaining module is further configured to abstract the first context information as an interface declaration form, to obtain the updated first context information.

Optionally, the first obtaining module is specifically configured to: obtain, from a file of the repository based on the code generation request, a source code file to which the first method belongs; obtain, from the source code file, following information whose writing location is posterior to the first method; adjust the writing location of the following information to be prior to the first method, so that the following information becomes preceding information of the first method after the location adjustment; and obtain the first context information based on the preceding information of the first method.

Optionally, the first obtaining module is further configured to: obtain correlation between multiple pieces of content in the first context information and the first method; and sort the multiple pieces of content based on the correlation corresponding to the multiple pieces of content, to obtain the updated first context information.

Optionally, the first obtaining module is specifically configured to arrange the multiple pieces of content to be prior to a task description of the first method, where a distance between any piece of content and the task description is inversely correlated with the correlation corresponding to the content.

Optionally, the obtaining correlation between multiple pieces of content in the first context information and the first method includes one or a combination of the following: obtaining a first similarity between an identifier of each piece of content and related information of the first method, where the first similarity is positively correlated with the correlation; obtaining a distance between each piece of content and a hierarchy of the first method in the repository, where the distance is inversely correlated with the correlation; and obtaining a second similarity between each piece of content and context information invoked by associated content of the first method, where the second similarity is positively correlated with the correlation, and the associated content of the first method includes one or more of the following: an association class of the target class to which the first method belongs, and another method in the target class.

Optionally, the identifier includes one or more of the following: a variable name, a method name, a package name, a class name, and a constant name.

Optionally, the related information includes one or more of the following: a method description, a method name, a return type, and a parameter type.

Optionally, the first obtaining module is further configured to generate a logical structure diagram of the repository, where the logical structure diagram indicates an association relationship between content in the repository. The first obtaining module is specifically configured to: analyze the logical structure diagram based on the code generation request, and obtain, from the information of the repository, the first context information needed for generating the first executable code.

Optionally, the generation module is specifically configured to input the first context information and the code generation request into a pre-trained model, to obtain the first executable code output by the pre-trained model.

Optionally, the cloud service-based code generation apparatus further includes: a second obtaining module, configured to obtain second executable code for implementing a second method in a successfully compiled repository; a third obtaining module, configured to obtain second context information of the second executable code; and a training module, configured to train a to-be-trained model by using the second context information as an input of the to-be-trained model and using the second executable code as an expected output of the to-be-trained model, to obtain the pre-trained model.

Optionally, the input of the to-be-trained model further includes one or more of the following: a method comment and a method signature that are of the second method.

Optionally, the second obtaining module is specifically configured to: obtain all second methods in the successfully compiled repository; sift all the second methods to obtain a sifted second method, where the sifted second method is used to express arithmetic logic; and
obtain second executable code for implementing the sifted second method.

Optionally, a second method that fails to pass the sifting has one or more of the following features: a method body of the second method is empty, the second method has a special purpose, and the method body of the second method does not include an operation expression.

Optionally, the special purpose includes one or more of the following: obtaining, setting, constructing, and returning.

Optionally, the context information includes one or more of the following: a class, functions of a variable and a method, access permission, and an invocation manner that are defined.

According to a third aspect, this application provides a computing device, including a memory and a processor. The memory stores program instructions. The processor runs the program instructions to perform the method according to any one of the first aspect and the possible implementations of the first aspect in this application.

According to a fourth aspect, this application provides a computing device cluster, including at least one computing device. Each computing device includes a processor and a memory. The processor of the at least one computing device is configured to execute instructions stored in the memory of the at least one computing device, to enable the computing device cluster to perform the method according to any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a computing device, the computing device is enabled to perform the method according to any one of the first aspect and the possible implementations of the first aspect in this application.

According to a sixth aspect, this application provides a computer program product including instructions. When the computer program product runs on a computer, the computer is enabled to perform the method according to any one of the first aspect and the possible implementations of the first aspect in this application.

### BRIEF DESCRIPTION OF DRAWINGS

FIG. 1 is a diagram of an implementation scenario related to a cloud service-based code generation method according to an embodiment of this application;
FIG. 2 is a diagram of an implementation scenario related to another cloud service-based code generation method according to an embodiment of this application;
FIG. 3 is a diagram of an implementation scenario related to still another cloud service-based code generation method according to an embodiment of this application;
FIG. 4 is a diagram of an implementation process of a cloud service-based code generation method according to an embodiment of this application;
FIG. 5 is a diagram of a frontend user interface (UI) of an integrated development environment according to an embodiment of this application;
FIG. 6 is a diagram of a UI according to an embodiment of this application;
FIG. 7 is a diagram of an implementation process of obtaining first context information according to an embodiment of this application;
FIG. 8 is a diagram of a logical structure diagram according to an embodiment of this application;
FIG. 9 is a diagram of an implementation process of performing code reorganization inside a file and obtaining first context information based on a reorganization result according to an embodiment of this application;
FIG. 10 is a diagram of a source code file according to an embodiment of this application;
FIG. 11 is a diagram obtained by performing in-file code partitioning on content of the source code file shown in FIG. 10 according to an embodiment of this application;
FIG. 12 is a diagram obtained by adjusting a writing location of following information in FIG. 11 according to an embodiment of this application;
FIG. 13 is a diagram of an implementation process of performing context expansion outside a file and obtaining first context information based on an expansion result according to an embodiment of this application;
FIG. 14 is a diagram obtained by supplementing external information to the source code file shown in FIG. 12 according to an embodiment of this application;
FIG. 15 is a diagram obtained by removing target information from first context information obtained from the source code file shown in FIG. 14, abstracting the first context information as an interface declaration form, and performing sorting on the first context information according to an embodiment of this application;
FIG. 16 is a diagram of triggering a code generation request in an integrated development environment according to an embodiment of this application;
FIG. 17 is a diagram of obtaining first context information according to an embodiment of this application;
FIG. 18 is a diagram of a preview UI of first context information according to an embodiment of this application;
FIG. 19 is a diagram of a generative pre-trained decoder model according to an embodiment of this application;
FIG. 20 is a diagram of a preview UI of first executable code according to an embodiment of this application;
FIG. 21 is a diagram obtained by inserting, at a generation point, the first executable code into a source code file to which a first method belongs according to an embodiment of this application;
FIG. 22 is a flowchart of a training method according to an embodiment of this application;
FIG. 23 is a flowchart of obtaining second executable code for implementing a second method in a successfully compiled repository according to an embodiment of this application;
FIG. 24 is a diagram of context information marked by using a placeholder according to an embodiment of this application;
FIG. 25 is a diagram of a process of a cloud service-based code generation method according to an embodiment of this application;
FIG. 26 is a diagram of a structure of a cloud service-based code generation apparatus according to an embodiment of this application;
FIG. 27 is a diagram of a structure of another cloud service-based code generation apparatus according to an embodiment of this application; and
FIG. 28 is a diagram of a structure of a computing device cluster according to an embodiment of this application.

### DESCRIPTION OF EMBODIMENTS

To make objectives, technical solutions, and advantages of this application clearer, the following further describes implementations of this application in detail with reference to the accompanying drawings.

In current code generation technologies, models (for example, AI models) are mainly used to generate code. Scenarios thereof mainly focus on generating code of a specific programming language based on a natural language description, so that users express requirements in the natural language description. Similar to a process of writing code by developers, a working process thereof is similar to that the developers first write code comments, and a model generates code snippets corresponding to functions described in the comments.

The code generation technology can significantly reduce costs caused by frequent switching between actual code writing and activities such as searching for knowledge, viewing a document, and searching for a reusable component, to improve development efficiency to some extent. However, a natural language processing technology is mainly used in a process of generating code by using the current code generation technology, and logical structure diagrams of the code and a repository are not fully considered. Consequently, a generation capability of the code generation technology is poor, and actual use experience of the code generation technology is poor.

An embodiment of this application provides a cloud service-based code generation method. The method includes: receiving a code generation request, where the code generation request is used to request to generate first executable code for implementing a first method in a repository; obtaining, from information of the repository based on the code generation request, first context information needed for generating the first executable code; and generating the first executable code based on the first context information and the code generation request.

In the cloud service-based code generation method, the first context information needed for generating the first executable code needs to be first obtained from the information of the repository. The first context information includes repository-level context information from the entire repository, and can reflect logical structure diagrams of code and the repository. In this way, more background knowledge needed by human developers during actual programming and more overall logic of the repository can be used in a code generation process. Therefore, a code generation capability is improved. This helps improve actual use experience of a code generation technology.

The repository is used to implement a user service. The information of the repository may be considered as information in a project source code folder. The project source code folder is a set of subfolders and/or source code files. The subfolder may further include a subfolder and/or a source code file. By analogy, a subfolder at a lowest level includes multiple source code files. In descending order of granularity, hierarchical units in the repository are respectively a repository, a code module (which may not be included in some repositories), a code package, a class, and a method (also referred to as a class method). Java code is used as an example. One repository includes one or more code modules, each code module includes one or more code packages, one code package includes one or more classes, one class includes one or more methods, and each method is used to implement one or more pieces of arithmetic logic. Correspondingly, the project source code folder of the repository includes one or more subfolders (referred to as a level-1 subfolder for ease of description), and the one or more level-1 subfolders are corresponding to one or more code modules. Each level-1 subfolder further includes one or more subfolders (referred to as a level-2 subfolder for ease of description), and the one or more level-2 subfolders are corresponding to one or more code packages. Each level-2 subfolder further includes one or more subfolders (referred to as a level-3 subfolder for ease of description), and the one or more level-3 subfolders are corresponding to one or more classes. Each level-3 subfolder further includes one or more source code files, and each source code file is used to record executable code for implementing a method in a class. A computing device executes, based on a relationship among the project source code folder, the subfolder, and the source code file of the repository, all executable code recorded in the source code file, to implement the user service.

It should be noted that names of the repository, the code module, the code package, the class, and the method in this application and a relationship thereof are examples for description, and are not intended to limit this application. In some implementation scenarios, the names of the repository, the code module, the code package, the class, and the method in this application and the relationship thereof may vary with application scenarios. For example, in some programming scenarios, the method is also referred to as a function. However, any solution of generating code by using the code generation idea in embodiments of this application shall also fall within the protection scope of this application.

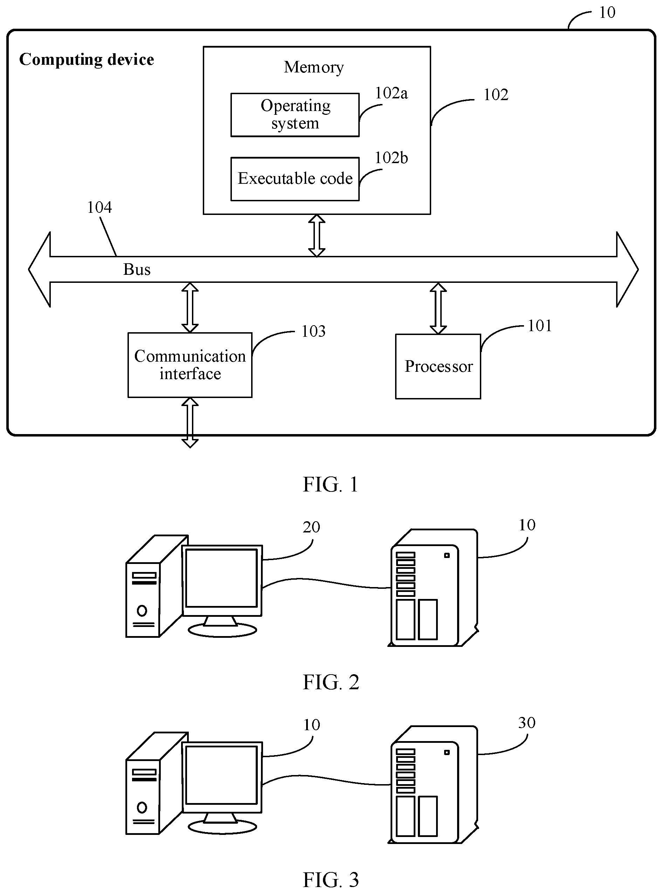

FIG. 1 is a diagram of an implementation scenario related to a cloud service-based code generation method according to an embodiment of this application. As shown in FIG. 1, the implementation scenario includes a computing device 10. The computing device 10 is configured to perform the cloud service-based code generation method provided in embodiments of this application. For example, the computing device 10 is configured to: receive a code generation request; obtain, from information of a repository based on the code generation request, first context information needed for generating first executable code; and generate the first executable code based on the first context information and the code generation request.

The computing device 10 may be implemented by using a physical machine, a physical machine cluster including multiple physical machines, a graphics card, an artificial intelligence computing chip, a bare metal server, a cloud server, a virtual machine, a container, or the like. In addition, the computing device 10 may be independently deployed on the physical machine, the physical machine cluster, the bare metal server, the cloud server, the virtual machine, or the container. Alternatively, the computing device 10 may be deployed on one or more of multiple physical machines, multiple physical machine clusters, multiple bare metal servers, multiple cloud servers, multiple virtual machines, and multiple containers in a distributed manner.

An embodiment of this application provides a computing device. The computing device is configured to perform a part or all of functions of the cloud service-based code generation method provided in embodiments of this application. FIG. 1 is a diagram of a structure of the computing device according to this embodiment of this application. As shown in FIG. 1, the computing device 10 includes a processor 101, a memory 102, a communication interface 103, and a bus 104. The processor 101, the memory 102, and the communication interface 103 are communicatively connected to each other through the bus 104. The computing device 10 may be a server or a terminal device. It should be understood that quantities of processors and memories in the computing device 10 are not limited in this application.

The processor 101 may include a general-purpose processor and/or a dedicated hardware chip. The general-purpose processor may include any one or more of processors such as a central processing unit (central processing unit, CPU), a microprocessor (micro processor, MP), or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor (digital signal processor, DSP), an application-specific integrated circuit (application-specific integrated circuit, ASIC), a field-programmable logic gate array (field-programmable logic gate array, FPGA), or a network processor (network processor, NP). The processor 101 may alternatively be an integrated circuit chip and has a signal processing capability. In an implementation process, the part or all of the functions of the cloud service-based code generation method in this application may be implemented by using an integrated logic circuit of hardware in the processor 101 or by using instructions in a form of software.

The memory 102 is configured to store a computer program, and the computer program includes an operating system 102a and executable code (namely, program instructions) 102b. For example, the memory 102 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the memory 102 is configured to store an egress port queue, and the like. For example, the memory 102 exists independently, and is connected to the processor 101 through the bus 104. Alternatively, the memory 102 and the processor 101 are integrated together. For example, the memory 102 may include a volatile memory (volatile memory), for example, a random access memory (random access memory, RAM). The processor 101 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 102 may store executable code. When the executable code stored in the memory 102 is executed by the processor 101, the processor 101 is configured to implement the part or all of the functions of the cloud service-based code generation method provided in embodiments of this application. In other words, the memory 102 stores instructions used to implement the part or all of the functions of the cloud service-based code generation method. For an implementation of performing the process by the processor 101, refer to the related descriptions in the foregoing embodiment. The memory 102 may further include a software module, data, and the like that are needed by another running process like the operating system.

The communication interface 103 uses, for example but not limited to, a network interface card, or a transceiver module like a transceiver, to implement communication between the computing device and another device or a communication network. For example, the communication interface 103 may be any one or any combination of the following components with network access functions: a network interface (for example, an Ethernet interface) and a wireless network interface card.

The bus 104 is any type of communication bus configured to implement interconnection between internal components (for example, the memory 102, the processor 101, and the communication interface 103) in the computing device. For example, the bus 104 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used to represent the bus in FIG. 1, but this does not mean that there is only one bus or only one type of bus. The bus 104 may include a path for transmitting information between components (for example, the memory 102, the processor 101, and the communication interface 103) of the computing device 10. In this embodiment of this application, an example in which the foregoing components in the computing device are interconnected through the bus 104 is used for description. Optionally, the foregoing components in the computing device 10 may be communicatively connected to each other in another connection manner other than the bus 104. For example, the foregoing components in the computing device 10 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. A specific implementation form of the foregoing components is not limited in embodiments of this application. Descriptions of procedures corresponding to the foregoing accompanying drawings have respective focuses. For a part that is not described in detail in a procedure, refer to related descriptions of another procedure.

There are multiple application scenarios of the cloud service-based code generation method provided in embodiments of this application. The following two examples are used below to describe the application scenarios.

In a first application scenario, the cloud service-based code generation method provided in embodiments of this application may be provided to a user in a form of code generation service. In addition, the code generation service may be invoked in a form of application programming interface (application programming interface, API). A service provider has a large quantity of basic resources, such as computing resources, storage resources, and network resources, and the service provider can provide the code generation service by using the basic resources. After the user purchases the code generation service from the service provider, the service provider can provide the code generation service for the user. The user may purchase the code generation service from a management platform of the service provider via a client, and send information of a repository (for example, all files of the repository) and a code generation request to the management platform of the service provider. The management platform of the service provider may allocate, to a computing device of the service provider, a task of generating first executable code, and send the information of the repository and the code generation request to the computing device to which the task is allocated. The computing device is configured to: perform, based on the information of the repository and the code generation request, the cloud service-based code generation method provided in embodiments of this application, to generate the first executable code, and provide the generated first executable code for the client, to complete a process of providing the code generation service for the user. Alternatively, based on some considerations (for example, a consideration for information security), after the user purchases the code generation service, the user may send the code generation request to the management platform via the client. The management platform may provide, for the client of the user, a tool configured to obtain first context information from the information of the repository. In this way, the client obtains the first context information from the information of the repository based on the tool, and sends the first context information to the management platform. The computing device of the service provider is configured to generate the first executable code based on the first context information and the code generation request, and provide the generated first executable code for the client, to complete the process of providing the code generation service for the user.

In this case, as shown in FIG. 2, the implementation scenario may further include a client 20. The client 20 is configured to implement interaction between the user and the management platform. Optionally, the client 20 may be a mobile phone, a tablet computer, a personal computer, a virtual machine, a container, a laptop computer, a mobile phone, a multimedia player, a smart home appliance, an artificial intelligence device, a smart wearable device, an e-reader, a smart vehicle-mounted device, an internet of things device, or the like. In this case, the computing device 10 may be a server. In addition, the server may be one server, a server cluster including several servers, or a cloud computing service center. A large quantity of basic resources owned by the cloud service provider are deployed in the cloud computing service center. For example, the computing resources, the storage resources, the network resources, and the like are deployed in the cloud computing service center. The cloud computing service center may run a file system by using the large quantity of basic resources, and implement the cloud service-based code generation method provided in embodiments of this application.

When the server is implemented by using the cloud computing service center, the server provides a code generation function for the user, and the cloud service provider may abstract the code generation function into a code generation cloud service on the cloud platform. After the user purchases the code generation cloud service on the cloud platform, the cloud platform can provide the code generation cloud service by using the resources in the cloud computing center and by using the cloud service-based code generation method provided in embodiments of this application. In addition, the code generation cloud service may be provided as an independent cloud service, or may be provided as an additional service of another cloud service.

Optionally, in this embodiment of this application, the cloud platform may be a cloud platform of a central cloud or a cloud platform of an edge cloud. In addition, when the computing device 10 is deployed in a distributed deployment manner, the cloud platform may alternatively be a cloud platform including a central cloud and an edge cloud. In this case, the computing device 10 may be partially deployed on the cloud platform of the edge cloud, and partially deployed on the cloud platform of the central cloud. This is not specifically limited in this embodiment of this application. It should be noted that in an implementation environment shown in FIG. 2, the computing device 10 may alternatively be implemented by using another resource platform other than the cloud platform. This is not specifically limited in this embodiment of this application. In this case, the server may be implemented by using a resource in the another resource platform, and provide a service related to code generation for the user.

In a second application scenario, the cloud service-based code generation method provided in embodiments of this application may be provided to users in a form of application package. For example, a service provider may provide, to the user, an application package used to implement the cloud service-based code generation method provided in embodiments of this application. In this case, a computing device 10 is a computing device owned by the user. After the user obtains the application package from the service provider, the user may install the application package in the computing device 10, to obtain an application program used to perform the cloud service-based code generation method. After the computing device 10 receives a code generation request of the user, the application program may perform, based on the code generation request, the cloud service-based code generation method, to generate first executable code. In an implementation, the cloud service-based code generation method may be used by the user in a manner such as a plug-in of code editor or of an integrated development environment (integrated development environment, IDE).

In this case, the computing device 10 may be a client. In addition, as shown in FIG. 3, the implementation scenario may further include a computing device 30. The computing device 30 is configured to provide, for the computing device 10, an application package used to implement the cloud service-based code generation method provided in embodiments of this application. Optionally, the computing device 30 may be a server or the like.

It should be understood that the foregoing content is examples of the application scenarios of the cloud service-based code generation method provided in embodiments of this application, and does not constitute a limitation on the application scenarios of the cloud service-based code generation method. A person of ordinary skill in the art may learn that, as a service requirement changes, the application scenario may be adjusted based on an application requirement. The application scenarios are not enumerated in embodiments of this application.

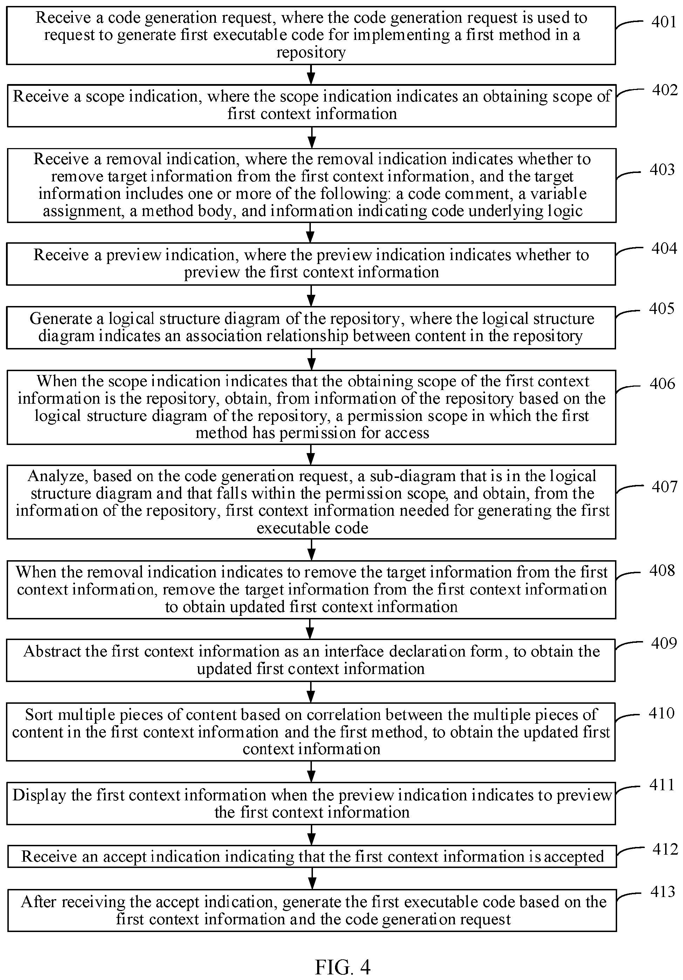

The following describes an implementation process of the cloud service-based code generation method provided in embodiments of this application. As shown in FIG. 4, the implementation process of the cloud service-based code generation method may include the following steps.

Step 401: Receive a code generation request, where the code generation request is used to request to generate first executable code for implementing a first method in a repository.

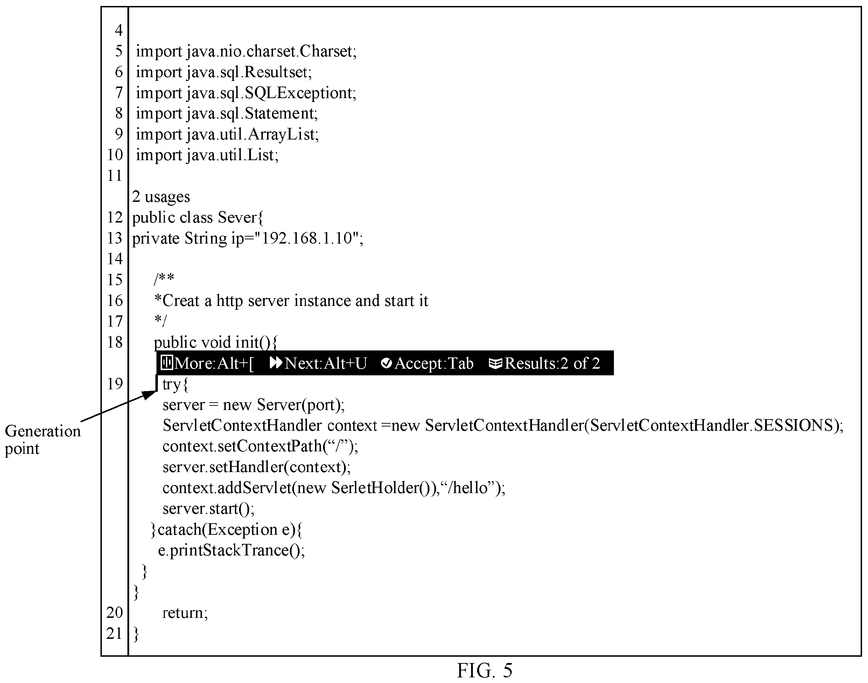

When a developer writes executable code in a code editor or an integrated development environment, the code generation request is triggered when an operation of the developer meets a trigger condition. The code generation request is used to request a computing device to execute a generation task, to obtain the first executable code. The code generation request carries a task description of a generation task. The computing device specifically executes the generation task based on the task description, to generate the first executable code. The task description is equivalent to a "subject", indicating a feature (for example, a function) of executable code that needs to be generated. A process in which the computing device generates the executable code based on the task description may be considered as a process of resolving a problem based on the "subject". In addition, the task description further indicates a generation point. The generation point indicates a location at which the generated first executable code is inserted in the repository. Optionally, the generation point may be a location at which the code generation request is triggered. For example, in a process of writing the executable code, the developer may perform a specified operation at a location at which the first executable code needs to be further written, to trigger the code generation request. The location at which the first executable code needs to be further encoded is the generation point. For another example, after the developer adds a comment to a code line in the integrated development environment, the integrated development environment may trigger the code generation request after detecting the operation of adding the comment. In this case, an end of the comment is the generation point. For another example, when the developer writes the code in the integrated development environment, the code generation request may be triggered when pause duration of an input cursor at a code writing location is greater than a specified duration threshold. In this case, the pause location is the generation point. For example, FIG. 5 is a diagram of a frontend UI of the integrated development environment according to an embodiment of this application. As shown in FIG. 5, the input cursor is located at a location of a black selection box in FIG. 5 (that is, a start location that is of the 19^{th} line and at which a cursor in FIG. 5 is located), and the location is the generation point.

A method in the integrated development environment may be implemented by one or more lines of executable code, and the method is used to implement a computing task. It should be noted that the cloud service-based code generation method provided in embodiments of this application may be further used to generate executable code of another unit, for example, may be used to generate executable code of a code line, a code package, or even a code module. This is not specifically limited in this embodiment of this application.

Step 402: Receive a scope indication, where the scope indication indicates an obtaining scope of first context information.

In this embodiment of this application, the computing device may generate executable code of a to-be-generated first method based on first context information of the first method. In addition, it can be learned from the foregoing descriptions that hierarchical units related to the repository are sequentially a repository, a code module, a code package, a class, and a method in descending order. In this case, the first context information may be obtained from different hierarchical units based on different application requirements. Therefore, a user may send the scope indication to the computing device via a client, to indicate the obtaining scope of the first context information. Correspondingly, the cloud service-based code generation method provided in embodiments of this application may further include: The computing device receives the scope indication. A candidate obtaining scope of the first context information may include: a repository, a code module, a code package, a class, and a source code file to which the first method belongs. In addition, when the executable code is written in the integrated development environment, a standard library or a third-party library (library) may be further used. Therefore, the candidate obtaining scope of the first context information further includes the standard library or the third-party library.

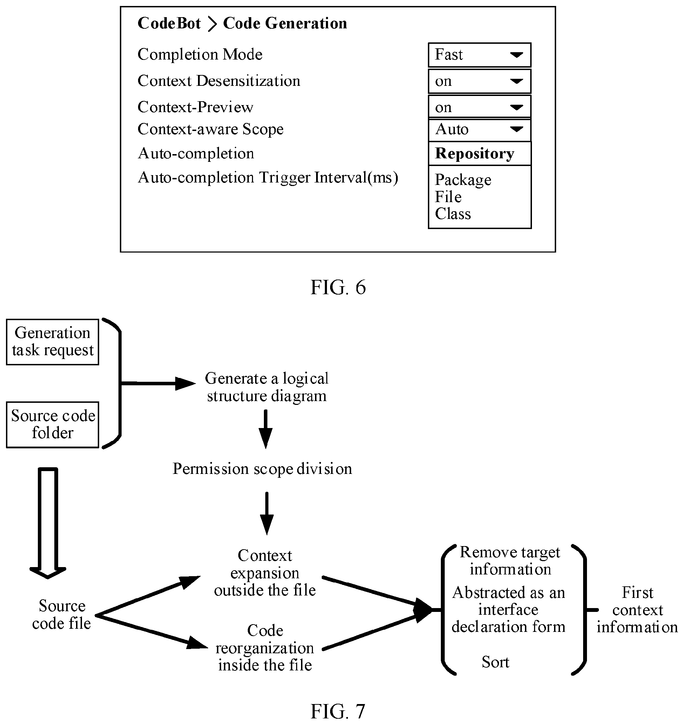

For example, FIG. 6 is a diagram of a UI for selecting an obtaining scope by the user according to an embodiment of this application. As shown in FIG. 6, "Context-aware Scope" represents an option of the obtaining scope, and candidate options of the obtaining scope include auto (auto), a repository (repository), a code package (package), a source code file (file) to which the first method belongs, and a class (class). The user may select the obtaining scope of the first context information from the multiple candidate options. The auto means that the first context information is adaptively obtained from the entire repository based on the generation point. The repository, the code package, the source code file, and the class represent that the first context information is obtained within their respective limited scopes. In addition, the obtaining scope may be auto by default. When the user considers that another obtaining scope needs to be selected, the user may select the another obtaining scope through the UI.

Context information is related information needed for executing a task. In an implementation, the context information includes one or more of the following: a class, functions of a variable and a method, access permission, and an invocation manner that are defined. The first context information is obtained, and the first executable code is generated based on the first context information. In this way, the class, the functions of the variable and the method, the access permission, and the invocation manner that are defined in the repository can be reused. This simplifies complexity of generating the first executable code, and helps improve a code generation capability.

Step 403: Receive a removal indication, where the removal indication indicates whether to remove target information from the first context information, and the target information includes one or more of the following: a code comment, a variable assignment, a method body, and information indicating code underlying logic.

During code reuse, no much attention usually needs to be paid to implementation details of an invoked method or the variable assignment. For example, in an object-oriented programming scenario, no much attention needs to be paid to the implementation details of the invoked method or the variable assignment in a programming process due to abstraction, encapsulation, and inheritance features of object-oriented programming. The first context information may include the implementation details of the invoked method or the variable assignment. In addition, by observing actual code, it may be found that sensitive data (such as a credential, a password, a key, and system information) or user privacy information (such as an IP address, a user name, and personal information) may be included in locations of comments, constants, character strings, and code underlying logic. However, the information is not needed for generation of the first executable code. The context information may include some privacy information or sensitive information, and security and privacy security of code assets of the user are affected in the case of leakage of the information. Therefore, the user may determine, based on an application requirement, whether the target information in the first context information needs to be removed, to avoid leakage of the target information. The target information may include one or more of the following: the implementation details of the invoked method, the method body, the variable assignment, the code comment, and the information indicating the underlying logic of the code.

In an implementation, the removal indication may indicate that a removal operation needs to be performed. When receiving the removal indication indicating to perform the removal operation, the computing device may remove information according to a preset policy, and the user does not need to indicate a specific type of the target information that needs to be removed, that is, does not need to indicate whether the target information is the implementation details of the invoked method, the variable assignment, or the sensitive information included in the code. In another implementation, the removal indication may not only indicate that a removal operation needs to be performed, but also indicate a specific type of the target information that needs to be removed.

For example, FIG. 6 is a diagram of a UI of the removal indication according to an embodiment of this application. As shown in FIG. 6, the user may select "on" in an option of a removal function, to indicate to remove the target information from the first context information; or the user may select "off" in an option of a removal function, to indicate that the target information does not need to be removed from the first context information. In this case, the removal indication indicates only whether the removal operation needs to be performed. "Context Desensitization" in FIG. 6 indicates an option of a context desensitization function, that is, the removal operation in FIG. 6 is implemented through desensitization processing.

Step 404: Receive a preview indication, where the preview indication indicates whether to preview the first context information.

The user may indicate, based on a requirement, whether to view the obtained first context information. When the user needs or does not need to view the obtained first context information, the user may perform a corresponding operation to trigger the preview indication, and convey a requirement of the user to the computing device through the preview indication.

For example, FIG. 6 is a diagram of a UI of the preview indication according to an embodiment of this application. As shown in FIG. 6, the user may select "on" in an option of a preview function, to indicate that the first context information needs to be previewed; or the user may select "off" in an option of a preview function, to indicate that the first context information does not need to be previewed. "Context-Preview" in FIG. 6 represents an option of previewing the first context information.

It should be noted that a part or all of the scope indication, the removal indication, and the preview indication may be carried in the code generation request, or may be sent independently of the code generation request. This is not specifically limited in this embodiment of this application. In addition, the computing device may provide a part or all of functions of receiving the scope indication, the removal indication, and the preview indication, or may not provide the function. Specific implementation of the function may be set based on an application requirement. Correspondingly, when the computing device does not provide a part or all of the functions of the scope indication, the removal indication, and the preview indication, the computing device does not need to perform a corresponding step in a process of generating the first executable code.

Step 405: Generate a logical structure diagram of the repository, where the logical structure diagram indicates an association relationship between content in the repository.

The computing device may analyze the content in the repository, and generate the logical structure diagram of the repository based on the association relationship between the content. The logical structure diagram is a data structure in a diagram format. The content in the repository may be obtained through semantic division. For example, the content may be content of the hierarchical units such as the repository, the code module, the code package, the class, and the method.

In an implementation, the logical structure diagram may be represented by using a repository structure diagram having a tree structure. Each hierarchical unit in the repository may be expanded. In addition, a root node, an intermediate node, and a leaf node in the logical structure diagram are used to represent corresponding hierarchical units, and an edge is added between the root node, the intermediate node, and the leaf node based on the association relationship between the hierarchical units, to obtain the logical structure diagram that represents a hierarchy and a reference relationship that are between the hierarchical units in the repository. The root node represents the repository. The hierarchical unit represented by the leaf node is the same as a hierarchical unit to which executable code that needs to be generated belongs. For example, a hierarchical unit of executable code that needs to be generated in the cloud service-based code generation method is a method. In this case, the hierarchical unit represented by the leaf node is a method. Correspondingly, the intermediate node represents a hierarchical unit whose granularity is between the repository and the method. For example, hierarchical units represented by different intermediate nodes may be respectively a code module, a code package, and a class.

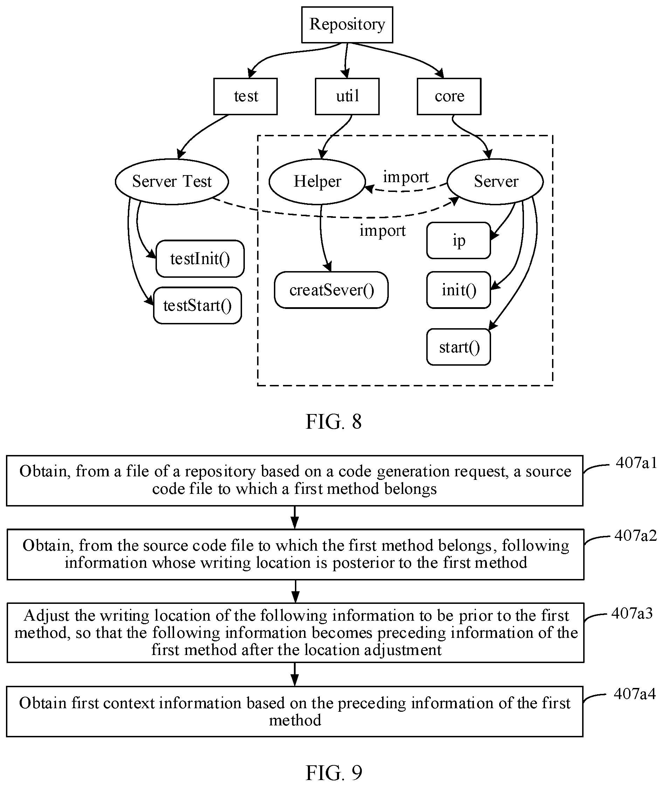

Java code is used as an example. The logical structure diagram may be represented by a B+ tree diagram. In this case, in a process of generating the logical structure diagram, the repository, the code module, the code package, the class file, and the source code file may be separately expanded, a root node of the B+ tree represents the repository, a leaf node of the B+ tree represents the method, and intermediate nodes at different levels of the B+ tree represent different hierarchical units between the repository and the method. In addition, based on the association relationship between the repository, the code module, the code package, the class file, and the method in the source code file, edges are added between the root node, the intermediate nodes, and the leaf node, to obtain the B+ tree diagram representing the hierarchy and the reference relationship among the repository, the code module, the code package, the class file, and the method. For example, FIG. 7 is a diagram of an implementation process in which the computing device obtains the first context information. As shown in FIG. 7, after receiving the code generation request, the computing device may determine, based on the code generation request, the repository to which the first method belongs, and generate the logical structure diagram of the repository. FIG. 8 is a diagram of the generated logical structure diagram. As shown in FIG. 8, frames in a same shape in FIG. 8 represent hierarchical units of a same granularity, and granularities of multiple hierarchical units in FIG. 8 sequentially decrease from top to bottom in FIG. 8. In FIG. 8, solid line arrows represent relationships between different hierarchical units, dashed line arrows represent relationships between hierarchical units of a same granularity, and "import" in FIG. 8 is an import statement in Java.

Step 406: When the scope indication indicates that the obtaining scope of the first context information is the repository, obtain, from information of the repository based on the logical structure diagram of the repository, a permission scope in which the first method has permission for access.

Optionally, before the first context information is obtained, permission of the permission scope in which the first method has the permission for access may be first performed, and the first context information is obtained with the permission scope. In this way, the first context information needs to be obtained only within the permission scope in which the first method has the permission for access, so that content that the first method has no permission to access is not introduced into the first method. This ensures efficiency and effectiveness of the obtained first context information.

In an implementation, an implementation process of step 406 includes: obtaining the permission scope based on at least one of a location of the first method in the repository, a hierarchy of a target class to which the first method belongs, the reference relationship, and access control permission of the target class. The location of the first method in the repository may be represented by a generation point. The hierarchy of the target class represents a hierarchy of the target class in the hierarchical units of the repository. The reference relationship of the target class represents content referenced by the target class. The access control permission of the target class may be set by the developer, and is used to limit access control permission of executable code in the target class. The Java code is used as an example. Access control permission of an accessed object may be public (public), protected (protected), private (private), and default (default). When the access control permission of the accessed object is public, it indicates that the accessed object can be accessed by an access object of the entire repository. When the access control permission of the accessed object is private, it indicates that the accessed object can be accessed only by an access object within a scope of the accessed object. For example, when the access control permission of the class is private, information of the class can be accessed only by an access object like a method that belongs to the class. When the access control permission of the accessed object is the default, it indicates that the access control permission of the accessed object complies with a default specification of a programming language. It is specified in a Java language that content in same hierarchical units can be directly shared. For example, when multiple source code files belong to a same code package, and access permission of the multiple source code files is non-private, it is specified in the Java language that the multiple source code files may be directly shared, and the multiple source code files have mutual access permission. In the protected access permission, based on the default, access permission of a subclass for the accessed object is added. The subclass is a class obtained through inheritance. For example, Table 1 is an access permission specification in the Java language, where "yes" indicates that the access permission is available, and "no" indicates that the access permission is unavailable. For example, "yes" in the 2^{nd} row and the 2^{nd} column in Table 1 indicates that an access object that belongs to a same current class as the accessed object has the access permission for the accessed object.

**Table 1**

| Access permission | Current class | Class of a current package | Subclass | Non-subclass package different from the current package |
|---|---|---|---|---|
| public | Yes | Yes | Yes | Yes |
| protected | Yes | Yes | Yes | No |
| default | Yes | Yes | No | No |
| private | Yes | No | No | No |

Optionally, when the permission scope is determined, the location of the first method in the repository, the hierarchy of the target class, the reference relationship, and a scope in which the access permission is available may be first determined. Then, a scope in which the target class needs to perform access is determined based on the location of the first method in the repository, the hierarchy of the target class, and the reference relationship. An intersection of the scope in which the target class needs to perform the access and the scope in which the access permission is available is determined as the permission scope in which the first method has the permission for access. It should be noted that, if the logical structure diagram of the repository is generated, when the permission scope is determined, analysis may be performed based on the foregoing descriptions and a relationship that is between the nodes and that is represented by the logical structure diagram, to determine the permission scope. In addition, the permission scope may be considered as a sub-diagram of the logical structure diagram. For example, as shown in FIG. 7, after generating the logical structure diagram of the repository, the computing device divides, in the logical structure diagram, the permission scope in which the first method has the permission for access. The permission scope is a scope circled by a dashed-line box in FIG. 8.

Step 407: Analyze, based on the code generation request, a sub-diagram that is in the logical structure diagram and that falls within the permission scope, and obtain, from the information of the repository, first context information needed for generating the first executable code.

When the scope indication indicates that the obtaining scope of the first context information is the repository, the computing device can obtain the first context information from the entire repository. In this way, when generating the first executable code, the computing device can consider the logical structure diagrams of the code and the repository. This helps improve the code generation capability.

It can be learned from the foregoing descriptions that executable code for implementing a method is usually stored in a source code file. Therefore, the first context information may include content in the source code file to which the first method belongs, or may include content outside the source code file to which the first method belongs. In this case, when the first context information is obtained, the first context information may be separately obtained from the source code file to which the first method belongs and from outside the source code file. In an implementation, the obtaining first context information needed for generating the first executable code includes: performing processing such as context expansion outside the file and code reorganization inside the file, and obtaining the first context information based on a processing result.

In an implementation, as shown in FIG. 9, an implementation process of performing the code reorganization inside the file and obtaining the first context information based on the reorganization result includes the following steps.

Step 407a1: Obtain, from a file of the repository based on the code generation request, the source code file to which the first method belongs.

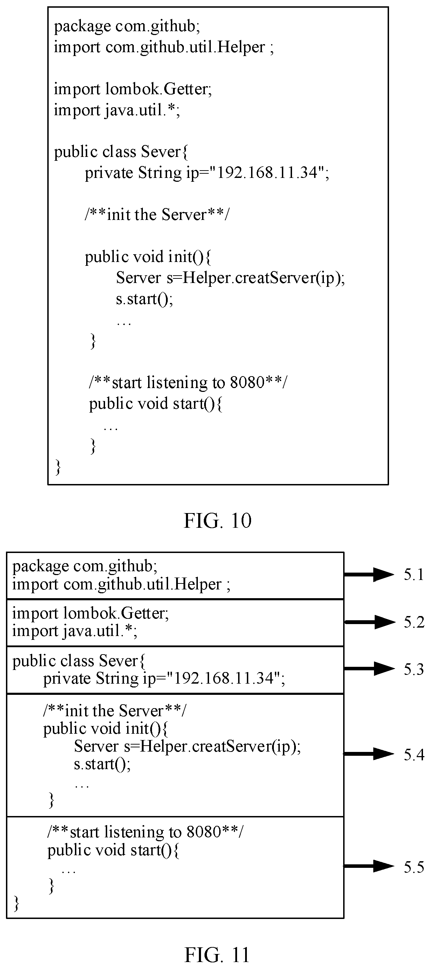

It can be learned from the foregoing descriptions that the executable code of the method is stored in the source code file. In this case, the source code file to which the first method belongs may be located in the file of the repository based on the code generation request. A process of locating the source code file to which the first method belongs is actually a process of determining, based on the generation point indicated by the code generation request, a source code file in which the generation point is located. For example, as shown in FIG. 7, after receiving the code generation request, the computing device may determine, based on the code generation request, the source code file to which the first method belongs. Content of the source code file is shown in FIG. 10.

Step 407a2: Obtain, from the source code file to which the first method belongs, following information whose writing location is posterior to the first method.

After the source code file to which the first method belongs is obtained, a writing location of the first method in the source code file may be obtained. Then, the following information whose writing location is posterior to the first method is obtained from the source code file. A location of the generation point in the source code file is the writing location of the first method in the source code file. In the source code file, all information that is written after the generation point is the following information of the first method. Correspondingly, all information that is written before the generation point is preceding information of the first method. The preceding information usually includes a code package, an import statement, a signature of a class of the preceding information, and some declarations (such as a member variable, a constructor, and some methods) of the class. The following information usually includes another method declaration of a class of the following information. The process of obtaining the following information is actually a process of partitioning content in the source code file, that is, a process of partitioning code in the file. In this process, the content in the source code file is divided into the preceding information and the following information of the first method. For example, as shown in FIG. 11, after intra-file code partitioning is performed on the content of the source code file shown in FIG. 10, the content of the source code file is divided into three parts: the preceding information, the first method, and the following information. In FIG. 11, content before arrows pointing to 5.1, 5.2, and 5.3 is the preceding information, content before an arrow pointing to 5.4 is the first method, and content before an arrow pointing to 5.5 is the following information. Because FIG. 11, FIG. 12, FIG. 14, and FIG. 15 are associated, for ease of description, a number is marked before each block in FIG. 11, FIG. 12, FIG. 14, and FIG. 15, and an arrow is marked after the block to indicate association between the diagrams. In addition, a number before any block in FIG. 11, FIG. 12, FIG. 14, and FIG. 15 indicates the block, and an arrow after the block indicates content of the block after processing.

Step 407a3: Adjust the writing location of the following information to be prior to the first method, so that the following information becomes preceding information of the first method after the location adjustment.

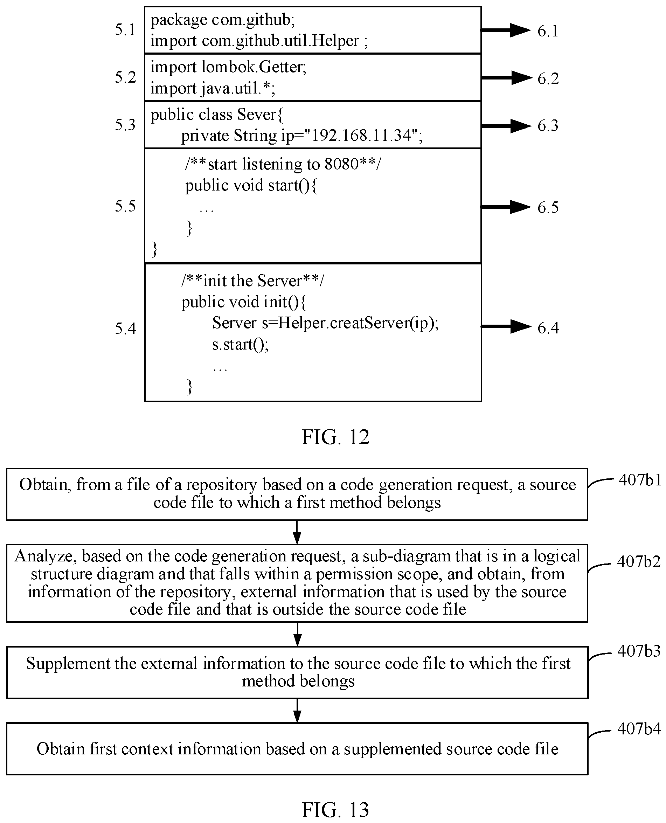

In some pieces of executable code (for example, executable code using a compiled language), writing sequences of methods in a source code file are not very important, and exchanging sequences of different methods does not affect execution and semantics of an executable program. For example, in a complied language like Java, sequences of methods is not important, and exchanging the sequences does not affect execution and semantics of a program. However, when the first executable code is generated based on the first context information, the first context information is usually sensed from top to bottom in the natural language. A change in a sequence of different content in the first context information may affect semantics, and even the following information cannot be sensed. Consequently, it is difficult to obtain and use global information such as background knowledge, a structure, and code of the repository. For example, when the first executable code is generated by using a pre-trained language model, the pre-trained language model usually uses a top-to-bottom training sequence similar to that in the natural language, and cannot sense the following information. Therefore, after the following information of the first method is obtained, the following information may be adjusted to be prior to the first method, so that the following information of the first method becomes the preceding information of the first method, to achieve an objective of reorganizing code in the source code file. For example, after the writing location of the following information in FIG. 11 is adjusted, locations of the preceding information, the first method, and the following information in the source code file are shown in FIG. 12. It can be learned that a writing sequence of the following information indicated by 5.5 in FIG. 12 is adjusted to be prior to a writing location of the first method indicated by 5.4 in FIG. 12. The foregoing step 407a1 to step 407a3 are a process of reorganization the code in the source code file.

Step 407a4: Obtain the first context information based on the preceding information of the first method.

After the code is reorganized in the source code file, the first context information may be obtained based on preceding information in a reorganized source code file. For example, all the preceding information in the reorganized source code file may be determined as the first context information. For another example, when other processing needs to be performed on the reorganized source code file, the other processing (for example, context expansion outside the file) may be further performed on the reorganized source code file, and the first context information is obtained based on a source code file on which the other processing is performed.

In an implementation, as shown in FIG. 13, an implementation process of performing the context expansion outside the file and obtaining the first context information based on the expansion result includes the following steps.

Step 407b1: Obtain, from a file of the repository based on the code generation request, the source code file to which the first method belongs.

For an implementation process of step 407b1, refer to the implementation process of step 405a1. Details are not described herein again.

Step 407b2: Analyze, based on the code generation request, a sub-diagram that is in the logical structure diagram and that falls within the permission scope, and obtain, from the information of the repository, external information that is used by the source code file and that is outside the source code file.

In the information of the repository, a part of the information may be used by the source code file to which the first method belongs, and a part of the information may not be used by the source code file to which the first method belongs. When context expansion is performed outside the file, the external information used by the source code file to which the first method belongs needs to be first determined in the information of the repository, and the context expansion is performed based on the external information. In a possible implementation, the external information may be determined based on an association relationship between the source code file and another hierarchical unit in the repository. For example, when the logical structure diagram is analyzed based on the code generation request, the external information may be determined based on an edge between another node and a node that represents content in the source code file and that is in the logical structure diagram. When there is an edge between the node that represents content in the source code file and that is in the logical structure diagram and a node that represents content outside the source code file and that is in the logical structure diagram, the content outside the source code file is the external information. For another example, when executable code in the source code file indicates that content in another hierarchical unit needs to be used, the content that needs to be used and that is indicated by the executable code in the source code file may be determined as the external information based on the indication. The Java code is used as an example. An import statement is an import statement in Java, and indicates that content in another hierarchical unit needs to be used. In this case, when the external information is determined, information that is imported by using the import statement and that is outside the source code file may be determined based on the indication of the import statement, and the information is determined as the external information. It should be noted that, in some programming scenarios, executable code in a current source code file indicates that content in another hierarchical unit needs to be used, and may not indicate the used content in an explicit manner. In this case, when the external information is determined, it is determined, based on actual content represented by the executable code in the source code file, that the source code file needs to use the content in the another hierarchical unit. Java code is used as an example. Content in a same hierarchical unit may be directly shared (for example, multiple source code files in a same code package may be directly shared), and does not need to be imported by using an import statement. Therefore, the external information needs to be determined based on the actual content represented by the executable code in the source code file.

It should be noted that, if the permission scope in which the first method has the permission for access is determined, the obtaining, from the information of the repository, external information that is used by the source code file and that is outside the source code file includes: obtaining the external information within the permission scope. That is, when the external information is obtained, the external information is obtained from information that is outside the source code file to which the first method belongs and that is within the permission scope, and the external information does not need to be obtained outside the permission scope. Similarly, when the external information is obtained based on the logical structure diagram of the repository, a sub-diagram that is in the logical structure diagram and that falls within the permission scope is analyzed based on the code generation request, and the external information that is used by the source code file and that is outside the source code file is obtained from the information of the repository. An implementation process of obtaining the external information within the permission scope is different from an implementation process of obtaining the external information from the entire repository in only a size of a candidate scope for obtaining the external information. Implementations of obtaining the external information within the candidate scope are the same. Therefore, the implementation of obtaining the external information within the permission scope is not described herein again. The external information is obtained within the permission scope in which the first method has the permission for access, and content that the first method has no permission to access is not introduced into the first method. This ensures efficiency and effectiveness of the obtained first context information.

Step 407b3: Supplement the external information to the source code file to which the first method belongs.

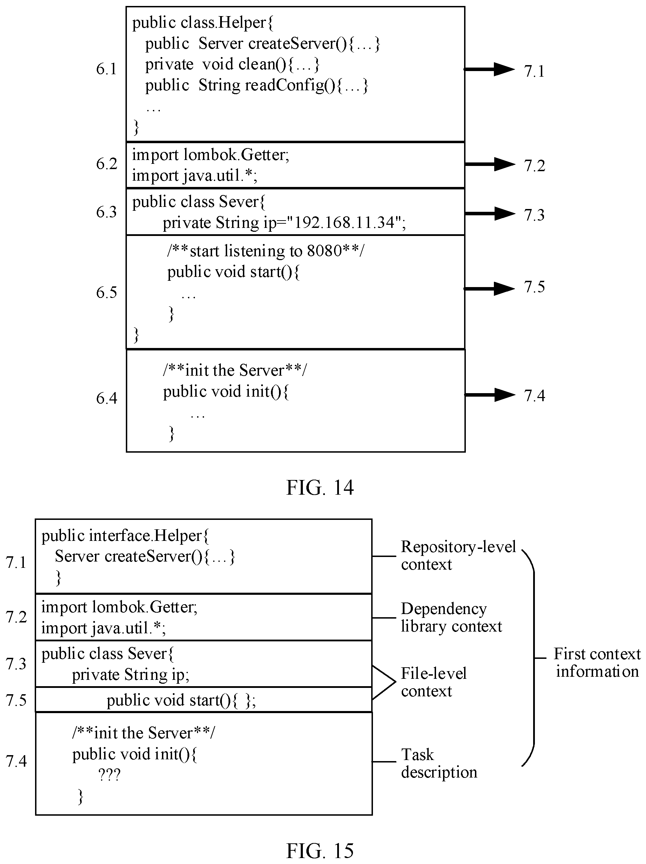

After the external information is determined, the external information may be supplemented to the source code file to which the first method belongs, to expand the context based on the external information outside the source code file, so that the first executable code is generated based on the external information and the source code file. In an implementation, an implementation of supplementing the external information to the source code file may include: replacing, at a location at which the external information is used in the source code file, content indicating the external information. For example, when the import statement is used to import the external information to the source code file, the import statement may be replaced with the external information. For example, FIG. 14 is a diagram obtained by supplementing the external information to the source code file shown in FIG. 12. It can be learned from FIG. 14 that the external information is supplemented to the part 5.1 in FIG. 12, and 5.1 becomes 6.1 in FIG. 14 after the external information is supplemented.

Step 407b4: Obtain the first context information based on a supplemented source code file.

After the external information is supplemented to the source code file, the first context information may be obtained based on the supplemented source code file. For example, all information in the supplemented source code file may be determined as the first context information. For another example, when other processing needs to be performed on the supplemented source code file, the other processing (for example, code reorganization inside the file) may be further performed on the supplemented source code file, and the first context information is obtained based on a source code file on which the other processing is performed.

It should be noted that, when the first context information is obtained, in addition to performing processing such as context expansion outside the file and code reorganization inside the file, some other analysis manners may be further combined. For example, program analysis tools such as Eclipse JDT and TreeSitter are used, and/or intermediate data (for example, a PSI of Intellji) obtained by analyzing a project in the integrated development environment is accessed through an application programming interface provided by the integrated development environment, and/or project index information cached in the integrated development environment is reused, to obtain the first context information more quickly and accurately, and provide more generation bases for a code generation model.

Step 408: When the removal indication indicates to remove the target information from the first context information, remove the target information from the first context information to obtain updated first context information.

When the removal indication indicates to remove the target information from the first context information, after the first context information is obtained, the target information is further removed from the first context information, to update the first context information. In this way, information irrelevant to generation of the first executable code, privacy-related information, and/or sensitive information can be deleted from the first context information, so that related content that reflects signature information and a hierarchical structure that are of content in the first context is retained in the first context. The first context information can be compressed, so that context information including more valuable content can be input at a same input length. In addition, availability of generated code, user privacy, and security of the code can be further ensured. When the code generation model is used to generate the first executable code based on the first context information, because an input length (also referred to as a window size, usually 1024 to 4096) of the code generation model is limited, when the input length is limited, if the first context information obtained in the foregoing step is directly used, redundant information is introduced to the code generation model to limit an amount of context information that can be used by the code generation model. Consequently, utilization efficiency of the context information is reduced. Therefore, by compressing the first context information, information in the first context information with little significant on generating the first executable code can be deleted, so that more valuable context information is input within the limited input length, to improve the utilization efficiency of the context information, so as to improve the code generation capability. As shown in FIG. 15, target information such as "private void clean(){...}" and "public String readConfig(){...}" in 6.1, an IP address "192.168.11.34" in 6.3, and an identifier "/**start listening to 8080**/" in 6.5 in FIG. 14 is removed by performing the removal operation.

In an implementation, the target information may be removed according to a preset removal rule. The removal rule indicates to remove all content that meets the target information from the first context information. Alternatively, the target information may be removed by using a third-party tool (for example, ShiftLeft).

Step 409: Abstract the first context information as an interface declaration form, to obtain the updated first context information.

When the first executable code is generated by using a pre-trained model, before the first executable code is generated based on the first context information and the code generation request, abstraction processing may be performed on the first context information, to abstract the first context information as an interface declaration (interface declaration) form that conforms to syntax, so as to reuse programming language syntax knowledge learned by the pre-trained model in a training process. In an implementation, the Java code is used as an example. The abstracting the first context information as an interface declaration form may include: changing a class (for example, a class) in the first context information into an interface (for example, an interface). This process is also referred to as standardizing the first context information based on an interface representation. As shown in FIG. 15, the class in 6.1 in FIG. 14 is replaced with the interface.

Step 410: Sort multiple pieces of content based on correlation between the multiple pieces of content in the first context information and the first method, to obtain the updated first context information.

When the first executable code is generated by using the code generation model, because the input length of the code generation model is limited, after the first context information is obtained, the multiple pieces of content in the first context information may be further sorted, to input the multiple pieces of content in the first context information into the code generation model in a sorted sequence. This reduces a probability that content that is closely related to the first method is truncated due to the input length limitation when the content is input into the code generation model, so that context information of high importance can be input into the code generation model. In addition, when the first executable code is generated by using the code generation model, both the first context information and a task description of the first method need to be input into the code generation model. When reading input information, the code generation model reads the task description first. Then, based on a distance between the content and the task description, the code generation model first reads content close to the task description, and reads content far away from the task description. Therefore, in an implementation, the sorting multiple pieces of content based on correlation between the multiple pieces of content and the first method includes: arranging the multiple pieces of content before the task description of the first method, where a distance between any piece of content and the task description is inversely correlated with the correlation corresponding to the content. In addition, a correlation threshold may be set. When correlation between any piece of content and the first method is smaller than the correlation threshold, the content may be deleted from the first context information.

In this embodiment of this application, there are multiple implementations for obtaining the correlation between the multiple pieces of content in the first context information and the first method. The following several implementations are used as examples below for description. In addition, the implementation may include one or a combination of the following:

In a first implementation, the obtaining the correlation between the multiple pieces of content in the first context information and the first method includes: obtaining a first similarity between an identifier of each piece of content and related information of the first method. A first similarity between any piece of content and the first method is positively correlated with the correlation between the content and the first method, that is, a higher first similarity between the content and the first method indicates stronger correlation between the content and the first method. Optionally, the identifier includes one or more of the following: a variable name, a method name, a package name, a class name, and a constant name. The related information of the first method includes one or more of the following: a method description of the first method, a method name of the first method, a return type of the first method, and a parameter type of the first method.

In a second implementation, obtaining the correlation between the multiple pieces of content in the first context information and the first method includes: obtaining a distance between each piece of content and a hierarchy of the first method in the repository. A distance between any piece of content and the hierarchy of the first method in the repository is inversely correlated with the correlation between the content and the first method, that is, a larger distance between the content and the hierarchy of the first method in the repository indicates stronger correlation between the content and the first method. Optionally, distance differences between different methods and different code modules, code packages, and classes in the repository may be preset. When the distance between each piece of content and the hierarchy of the first method in the repository is obtained, hierarchical units in which the content and the first method are located may be determined. Then, a hierarchical unit spanned between the hierarchical unit in which the content is located and the hierarchical unit in which the first method is located is determined based on the hierarchical unit in which the content is located and the hierarchical unit in which the first method is located. Then, the distance between the content and the hierarchy of the first method in the repository is obtained based on a distance difference corresponding to the spanned hierarchical unit. For example, a sum of the distance difference corresponding to the hierarchical unit spanned between the hierarchical unit in which the content is located and the hierarchical unit in which the first method is located may be determined as the distance between the content and the hierarchy of the first method in the repository. Alternatively, when the first context information is obtained based on the logical structure diagram, the distance between the content and the hierarchy of the first method in the repository may be determined based on a quantity of hops from a node of the content in the logical structure diagram to a node of the first method in the logical structure diagram. For example, the quantity of hops from the node of the content in the logical structure diagram to the node of the first method in the logical structure diagram may be directly determined as the distance between the content and the hierarchy of the first method in the repository. Alternatively, weights may be set for different hierarchical units, and a distance between the content and the hierarchy of the first method in the repository may be determined based on a weight of a hop from the node of the content in the logical structure diagram to the node of the first method in the logical structure diagram. For example, when first content and the first method belong to different classes, a quantity of hops from a node of the first content in the logical structure diagram to the node of the first method in the logical structure diagram is at least 3. When second content has an inheritance relationship with the first method, a quantity of hops from a node of the second content in the logical structure diagram to the node of the first method in the logical structure diagram may be 2. In this case, a distance between the second content and the hierarchy of the first method in the repository is less than a distance between the first content and the hierarchy of the first method in the repository, and the second content is more correlated with the first method than the first content.

In a third implementation, the obtaining the correlation between the multiple pieces of content in the first context information and the first method includes: obtaining a second similarity between each piece of content and context information invoked by associated content of the first method. A second similarity between any piece of content and the context information invoked by the associated content of the first method is positively correlated with the correlation between the content and the first method, that is, a higher second similarity between the content and the context information invoked by the associated content of the first method indicates stronger correlation between the content and the first method. Optionally, the associated content of the first method includes one or more of the following: an association class of the target class to which the first method belongs, and another method other than the first method in the target class.

The association class of the target class means that services implemented by classes are associated. For example, for a class for obtaining names of students in a class, a class for obtaining scores of the students in the class, and a class for obtaining a name of a class teacher in the class, related information of the class needs to be obtained. Therefore, the three classes are association classes for each other. A process of obtaining the second similarity based on the context information invoked by the association class is equivalent to: On a premise that the target class to which the first method belongs has strong correlation with the association class of the target class by default, the second similarity between the content in the first context information and the context information invoked by the association class is obtained to infer a probability of invoking the content by the first method. In this way, the correlation between the content in the first context information and the first method is obtained. In some implementation scenarios, this implementation may also be referred to as obtaining a coupling degree between the content in the first context information and the first method.

In an implementation, when the leaf node of the logical structure diagram represents a method, the another method may be a method represented by a brother node of the leaf node representing the first method. In this case, a process of obtaining the second similarity based on context information invoked by the another method is equivalent to: On a premise that the first method has strong correlation with the another method by default, the second similarity between the content in the first context information and the context information invoked by the another method is obtained to infer a probability of invoking the content by the first method. In this way, the correlation between the content in the first context information and the first method is obtained. This implementation may also be referred to as obtaining a coupling degree between the content in the first context information and the first method.

For example, FIG. 15 is a diagram obtained by removing the target information from the first context information obtained from the source code file shown in FIG. 14, abstracting the first context information as an interface declaration form, and performing sorting. As shown in FIG. 15, after the target information is removed, the first context information is abstracted as the interface declaration form, and the sorting is performed, obtained first context information includes a repository-level context, a dependency library context, and a file-level context. The repository-level context is content in 7.1 in FIG. 15, the dependency library context is content in 7.2 in FIG. 15, and the file-level context is content in 7.3 and 7.5 in FIG. 15. In addition, as shown in FIG. 15, a task description of 7.4 in FIG. 15 is also obtained, and "???" in the task description is used to mark a generation point.

It should be noted that, in the source code file to which the first method belongs, types of the multiple pieces of content in the context information included in the source code file may be different. In a process of obtaining the first context information, different processing manners in step 407 to step 410 may be used for different types, to obtain effective and accurate first context information. For example, the source code file to which the first method belongs may include several parts: an internal import statement of the repository, import statements of the standard library and the third-party library, a class in which the generation point is located, another class defined in a file in a file header, and the like. The import statements of the standard library and the third-party library may be directly retained as a part of the first context information. For the class in which the generation point is located and the another classes defined in the file, the classes may be abstracted as interface declaration forms, and the classes may be sorted based on correlation between the classes and the first method. The context expansion outside the file may be performed on the internal import statement of the repository. For example, for the internal import statements of the repository, for example, a package statement and an import statement, another class (for example, an interface or an enumeration type) in a repository on which the current class depends may be analyzed, and content of the another class may be expanded. A member variable name, a method signature, a constant, and an access control keyword defined in the another class are analyzed, parts such as a specific assignment statement, initialization block, and method body are removed, the another class is abstracted as an interface declaration form, and the sorting is performed on the another class based on correlation between the another class and the first method.

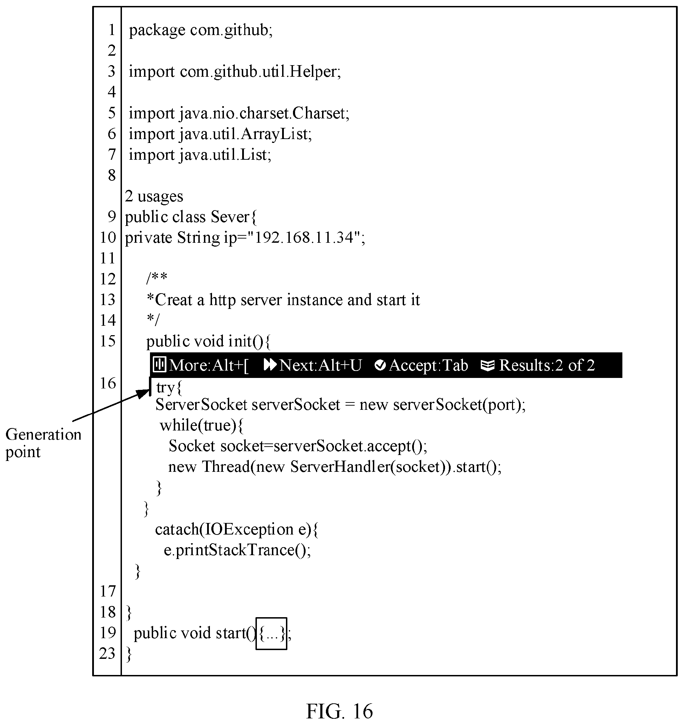

For example, FIG. 16 is a diagram of triggering the code generation request in the integrated development environment. As shown in FIG. 16, a generation point in FIG. 16 is located after a signature of an init() method (that is, a start location that is of the 16^{th} row and at which a cursor in FIG. 16 is located). In a related technology, a context whose writing location is within a specific scope near the generation point in the current source code file is usually sent to the code generation model in a form of text as a request, for the code generation model to generate executable code by using the context. Assuming that the input window of the code generation model is 1024, a maximum of 1024 tokens before and after the cursor are input into the code generation model. The context includes a method declaration of init (), a comment, a member variable declaration above init (), a class declaration statement, an import statement, and the like. In addition, some models (for example, InCoder of Meta) also allow other content below init () to be used as an input. In this input case, because obtained information is content in the current source code file at most, when generating the executable code based on the context, the code generation model tends to generate the executable code based on a code implementation solution that appears frequently in training data, for example, directly use a class like ServerSocket or ServerHandler for implementation from scratch. However, the executable code generated in this manner is excessively underlying, may include code from another repository and without imports, and does not meet a user expectation. Consequently, user experience is poor.

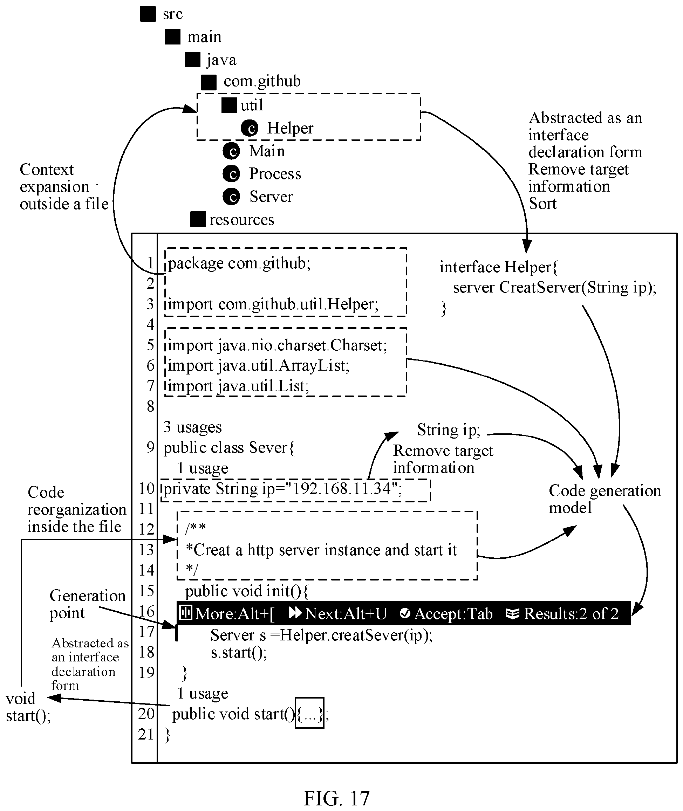

Assuming that configuration is performed based on a selection shown in FIG. 6, FIG. 17 is a diagram of obtaining the first context information based on the configuration in a manner of obtaining the context information according to this embodiment of this application. As shown in FIG. 17, after a generation point is determined, the computing device first analyzes a location of the current generation point, then classifies content in the source code file in which the first method is located, and performs a corresponding processing manner in step 407 to step 410 on corresponding content based on a type of the content. The processing manner includes: A part of the content in the source code file is directly used as the first context information. For the part of the content in the source code file, context is expanded outside the file, target information is removed, and the content is abstracted as an interface declaration form and sorted. Target information of expanded content is removed. For the part of the content in the source code file, code reorganization is performed inside the file, the target information is removed, and the content is abstracted as an interface declaration form.

Step 411: Display the first context information when the preview indication indicates to preview the first context information.

When the preview indication indicates to preview the first context information, after obtaining the first context information for generating the first executable code, the computing device may display the first context information to the user, so that the user views the first context information. When the first context information is not updated, the first context information for generating the first executable code is the first context information obtained in step 407. When the first context information is updated, the first context information for generating the first executable code is the updated first context information.

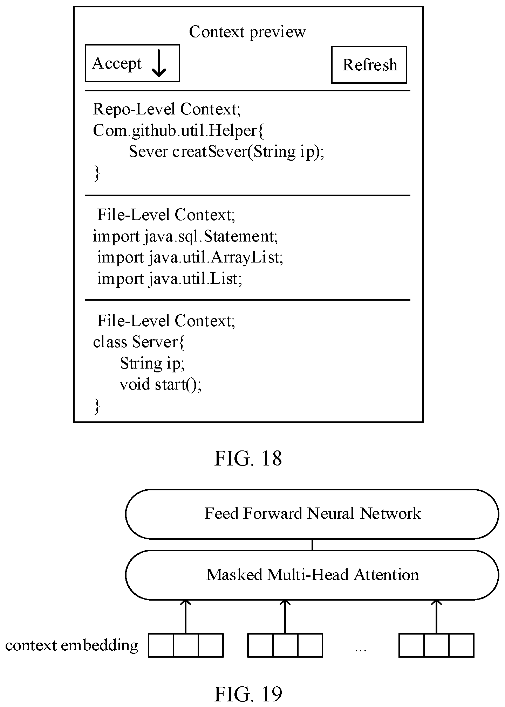

FIG. 18 is a diagram of a preview UI of the first context information according to an embodiment of this application. The preview U may be displayed on a right side of the frontend UI shown in FIG. 5. As shown in FIG. 18, the first context information obtained through the foregoing process includes: (1) a method declaration of createServer () in a util.Helper class; (2) a Java standard library imported to a current file; (3) a member variable ip declared by a current class Server; (4) and a method start () defined by the current class Server after the generation point. The context information is added before the comment of the init() method and is input to the code generation model as request content. In this way, the code generation model can easily generate an implementation that is related to a current repository context and that reuses existing encapsulated code as much as possible, to better meet the user expectation.

Step 412: Receive an accept indication indicating that the first context information is accepted.

When viewing the first context information, the user may review the first context information. When the user considers that the first context information meets an application requirement of the user, the user may perform a specified operation to trigger the accept indication, so as to notify the computing device that the user accepts the first context information. Correspondingly, after the user triggers the accept indication, the computing device receives the accept indication. As shown in FIG. 18, an accept (accept) button is disposed in an upper left corner of the preview UI. When the user considers that the first context information meets the application requirement of the user, the user may tap the accept button to trigger the accept indication, to notify the computing device that the user accepts the first context information. Correspondingly, a refresh (refresh) button is disposed in an upper right corner of the preview UI. When the user considers that the first context information does not meet the application requirement of the user, the user may tap the refresh button to trigger the computing device to obtain first context information again.

Step 413: After receiving the accept indication, generate the first executable code based on the first context information and the code generation request.

After receiving the accept indication, the computing device may generate the first executable code based on the first context information and the code generation request. The code generation request carries the task description. The computing device generates the first executable code based on the first context information and the code generation request, and generates the first executable code mainly based on the first context information and the task description. When the first executable code is generated by using the code generation model, an implementation process of step 413 may include: inputting the first context information and the code generation request into the code generation model, to obtain the first executable code output by the code generation model.

Optionally, the code generation model may be a pre-trained model. In an implementation, the code generation model used in this embodiment of this application may be a pre-trained language model (pre-trained language model, PLM), for example, a generative pre-trained decoder (generative pre-trained transformer, GPT) model. In addition, to explicitly distinguish between a context, a comment, and a code snippet, as shown in FIG. 19, a context embedding (context embedding) layer is introduced in the generative pre-trained decoder model. The context embedding layer is used to assign values to different types of content in input data, for example, assign 0 to content belonging to the context, assign 1 to code comment content, and assign 2 to the code snippet, so that the generative pre-trained decoder model can distinguish between features of the different types of content.

It should be noted that the preview indication may further indicate whether to preview the generated first executable code. When the preview indication indicates to preview the first executable code, after generating the first executable code, the computing device may display the first executable code to the user, so that the user views the first executable code. When viewing the first executable code, the user may review the first executable code. When the user considers that the first executable code meets the application requirement of the user, the user may perform the specified operation to trigger the accept indication, so as to notify the computing device that the user accepts the first executable code. Correspondingly, after the user triggers the accept indication, the computing device receives the accept indication, and may insert the first executable code at the generation point.

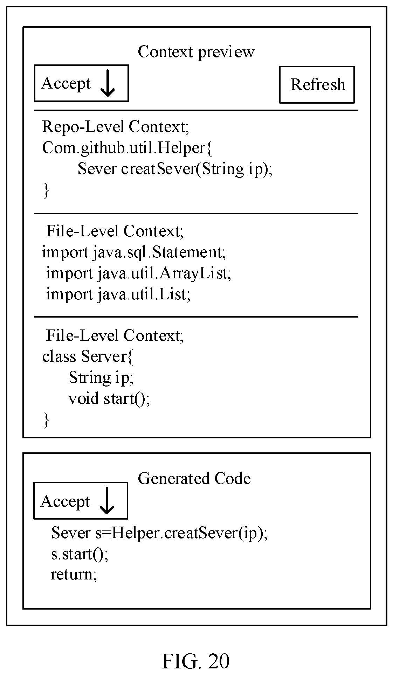

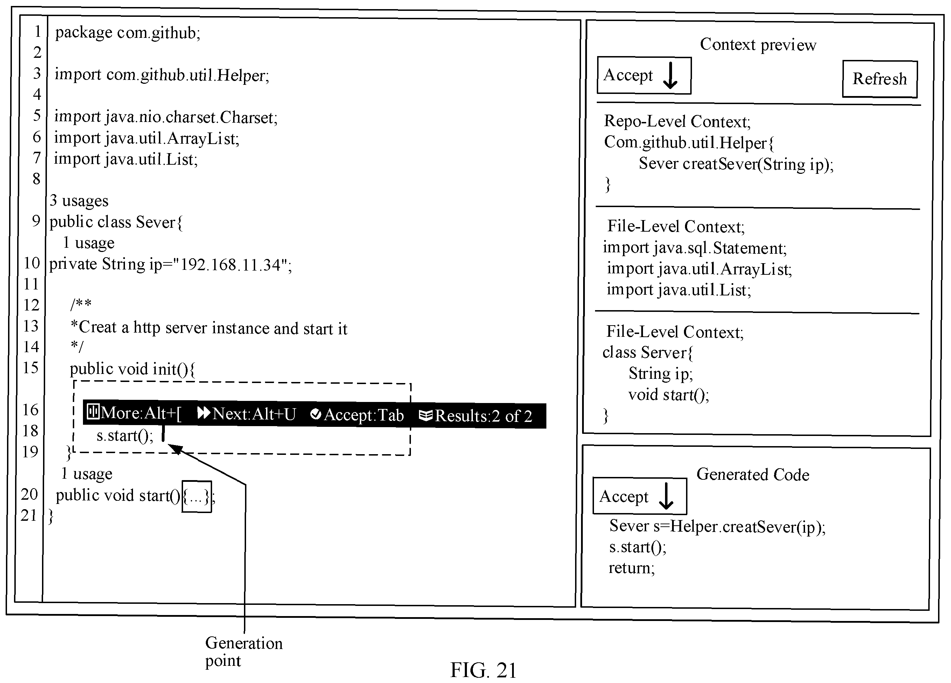

FIG. 20 is a diagram of a preview UI of the first executable code according to an embodiment of this application. As shown in FIG. 20, an accept (accept) button is disposed in an upper left corner of the preview UI. When the user considers that the first executable code meets the application requirement of the user, the user may tap the accept button to trigger the accept indication, to notify the computing device that the user accepts the first executable code. The computing device receives the accept indication, and may insert, at the generation point, the first executable code into the source code file to which the first method belongs. For example, a source code into which the first executable code is inserted is shown in FIG. 21, and executable code in a dashed-line box in FIG. 21 is the first executable code.

In conclusion, in the cloud service-based code generation method provided in embodiments of this application, after the code generation request is received, the first context information needed for generating the first executable code can be obtained from the information of the repository based on the code generation request. Then, the first executable code is generated based on the first context information and the code generation request. In the cloud service-based code generation method, the first context information needed for generating the first executable code needs to be first obtained from the information of the repository. The first context information includes repository-level context information from the entire repository, and can reflect logical structure diagrams of code and the repository. In this way, more background knowledge needed by human developers during actual programming and more overall logic of the repository can be used in a code generation process. Therefore, a code generation capability is improved. This helps improve actual use experience of a code generation technology.

It should be noted that the foregoing process of obtaining the first context information may be independent of a specific code generation process, that is, the foregoing process of obtaining the first context information may be decoupled from a process of generating the first executable code based on the first context information. Therefore, the foregoing capability of obtaining context information is universal among different code generation technologies, and can be integrated with different tools, to improve user experience of the different code generation technologies. For example, the process of obtaining context information may not only be used to generate executable code for implementing a method, but also be used to generate code of another unit like line-level code completion, and may be used to generate both code in an object-oriented language and code in a procedure-oriented language. In addition, with different application scenarios, the cloud service-based code generation method provided in embodiments of this application may also be implemented in multiple forms. For example, the possible forms may include: a new function that is of a client code editor (for example, VSCode) or an integrated development environment (for example, JetBrains series) and that appears iteratively with version update; a new feature that is of a code generation plug-in (for example, Copilot, Tabnine, or AiXCoder) based on a pre-trained language model and that emerges with version update; and an auxiliary coding function of a cloud code editor (for example, SourceGraph) or a development environment (for example, GitHub Codespace).

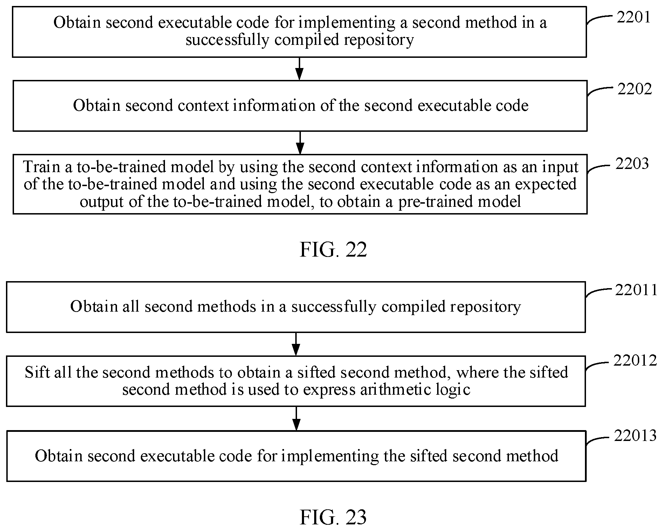

The following describes a training method for a pre-trained model. As shown in FIG. 22, the method includes the following steps.

Step 2201: Obtain second executable code for implementing a second method in a successfully compiled repository.

Optionally, as shown in FIG. 23, the obtaining second executable code for implementing a second method in a successfully compiled repository includes the following steps.

Step 22011: Obtain all second methods in the successfully compiled repository.

In executable code, a method is usually represented by a method body. Therefore, when the second method in the repository is obtained, all method bodies may be first determined in the repository, to obtain all the second methods represented by the method bodies. In an implementation, the successfully compiled repository may be from accumulation of historical development processes, or may be from some public data sources, for example, may be from an open-source software code repository (for example, GitHub).

It should be noted that, before step 22011 is performed, a logical structure diagram of the successfully compiled repository may be first generated, a leaf node in the logical structure diagram represents a method in the repository, and methods represented by all leaf nodes in the logical structure diagram are determined as second methods. For an implementation process of generating the logical structure diagram, refer to the implementation process of step 405. Details are not described herein again.

Step 22012: Sift all the second methods to obtain a sifted second method, where the sifted second method is used to express arithmetic logic.

After all the second methods in the successfully compiled repository are obtained, the second methods may be sifted to obtain a second method that meets a standard. Because only a method related to service implementation is helpful for generating code, the second method may be sifted based on whether the second method expresses meaningful service logic. Only a method for expressing specific arithmetic logic can express meaningful service logic. Therefore, during sifting, a second method used to express the arithmetic logic may pass the sifting, and a second method that does not express arithmetic logic fails to pass the sifting.

In an implementation, the second method that fails to pass the sifting may have one or more of the following features: a method body of the second method is empty, the second method has a special purpose, and the method body of the second method does not include an operation expression. Optionally, the special purpose may include one or more of the following: obtaining, setting, constructing, and returning. Java code is used as an example. A getter method is used for obtaining, a setter method is used for setting, a toString method is used to convert an object into a character string and return a result, and a hashCode method is used to return a hash value of an object. All these methods are special methods for implementing business services, and none of these methods express meaningful service logic. Therefore, none of these methods can pass the sifting.

Step 22013: Obtain second executable code for implementing the sifted second method.

After the second methods are sifted, the second executable code of the sifted second method may be obtained, so that the to-be-trained model is trained by using the second executable code. After the second methods are sifted, code in a method body of the sifted second method may be determined as the second executable code for implementing the second method.

Step 2202: Obtain second context information of the second executable code.

For an implementation process of obtaining the second context information of the second executable code, refer to the foregoing implementation process of obtaining the first context information needed for generating the first executable code, to align a training task and an inference task that are of the model. For example, before the second context information is obtained, a permission scope in which the second method has permission for access may be obtained in advance, and the second context information is obtained with the permission scope. When the second context information is obtained, processing such as context expansion outside a file and code reorganization inside the file may also be performed, and the second context information is obtained based on a processing result. In addition, after the second context information is obtained, the second context information may be further updated according to some policies. For example, target information is removed from the second context information, the second context information is abstracted as an interface declaration form, and multiple pieces of content in the second context information are sorted based on correlation between the multiple pieces of content and the second method. In addition, for an implementation process of the foregoing related process of obtaining the second context information, refer to the foregoing related descriptions of obtaining the first context information. In addition, if a logical structure diagram that is of a repository and that is used for training is generated in advance, the second context information of the second executable code may be obtained by analyzing the logical structure diagram. For an implementation process thereof, refer to the foregoing implementation process of obtaining the first context information based on the logical structure diagram. Details are not described herein again.

Step 2203: Train the to-be-trained model by using the second context information as an input of the to-be-trained model and using the second executable code as an expected output of the to-be-trained model, to obtain a pre-trained model.

After the second context information and the second executable code are obtained, the to-be-trained mode may be trained by using the second context information as the input of the to-be-trained model and using the second executable code as the expected output of the to-be-trained model, to obtain the pre-trained model. Second context information and second executable code that are of a same second method may form one piece of training data. Optionally, when the second method has a method comment, the input of the to-be-trained model may further include the method comment. Similarly, when the second method has a method signature, the input of the to-be-trained model may further include the method signature. The method signature indicates a use manner of the method.

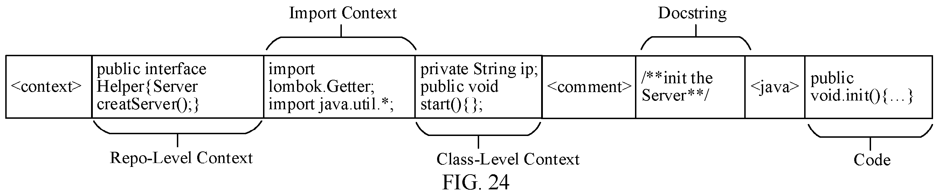

In an implementation, the pre-trained model used in this embodiment of this application may be a generative pre-trained decoder model. To adapt to an input format requirement of the generative pre-trained decoder model, the second context information needs to be processed into a sequence form first, and processed second context information is used for training, so that a feature of a language model is considered and a syntax rule of a programming language is met as much as possible. In an implementation, after the second context information is obtained, different types of context information may be concatenated in a sequence of a repository-level context, a file-level context, a class-level context, a method comment, and a method code snippet based on sources of the context information, and the different types of context information is marked by using placeholders (such as <context>, <comment>, and <java>), to formulate different loss update policies for different types of information in a training process. Optionally, the placeholder may be located at a start location of context information of corresponding type. The context information marked with the placeholders is shown in FIG. 24.

In addition, before the training data is used for training, the training data may be further converted into an operable tensor (tensor) (for example, a word vector) format. An implementation process thereof includes: Each word (Token) in the training data is first converted into an index corresponding to the word in a glossary by using a tokenizer (for example, Tokenizer) and the glossary (for example, Vocab), to obtain a sequence of an index corresponding to each word in the training data in the glossary, and a vector representation corresponding to the word may be obtained from a word embedding (word embedding) model based on the index. By analogy, a word vector matrix including vector representations of multiple pieces of training data is obtained. The word vector matrix is input to the to-be-trained model to train the to-be-trained model.

In the training process, in this embodiment of this application, model training and optimization may be performed by using a pretrain-finetune (pretrain-finetune) paradigm. At a pre-training stage to-be-trained model may learn a syntax and a pattern that are of a language in an unsupervised training process performed based on a massive corpus. At a fine-tuning stage, the to-be-trained model needs to perform targeted on data based on a downstream task target, and perform targeted optimization through supervised learning.

In addition, in the training method provided in this embodiment of this application, a causal language modeling (causal language modeling, CLM) manner may be used. A model is trained based on a task of predicting a next word (next token prediction) based on an existing word, but a loss value of only a to-be-predicted target code part (corresponding to a part after <java> in FIG. 24) is calculated. Then, a model weight is updated based on the loss value of this part, to optimize a prediction capability of the model for a code implementation part on a premise that repository-level context information and a current method function description are known.

It should be noted that, after the second context information is obtained, if a computing device also receives a preview indication, and the preview indication indicates that the second context information needs to be previewed, the computing device may display the second context information based on the preview indication, and after receiving an accept indication of the second context information, use the second context information as an input of the to-be-trained model.

It can be learned from the foregoing that, in the training method, the training data is obtained from the repository, so that the training data is repository-level data. Logical structure diagrams of code and the repository is taken into consideration, so that more background knowledge needed by a human developer in actual programming can be used in the training process. When the pre-trained model obtained through training by using the training method is used to generate code, a code generation capability of the pre-trained model can be improved. This helps improve actual use experience of generating code by using the pre-trained model. In addition, in the training method, the training task and the inference task of the model are aligned, so that a capability of sensing and utilizing context by the trained model can be improved. Using the pre-trained model obtained through training to generate code can greatly utilize performance of the model, further improve the code generation capability, and improve actual use experience of a code generation technology.

In addition, it can be learned from the foregoing training process of the to-be-trained model that the training method is oriented to a common training data processing solution and format for models. Therefore, the training method may be applied to pre-training of a code generation model starting from random initialization, and may also be applied to targeted optimization training of multiple existing code generation models (such as a Microsoft Codex model, a Salesforce CodeGen model, and a Meta InCoder model). In addition, based on different optimization objectives, the training method provided in this embodiment of this application may be applied to training at different stages, for example, direct pre-training (pretrain), multi-stage pre-training (multi-stage pretrain), and fine-tuning (finetune). In an implementation, the direct pre-training is training of a model directly starting from random initialization. The multi-stage pre-training is that a pre-trained model is further trained after data is changed and a hyperparameter is modified. The fine-tuning is to perform targeted training on a dataset or a downstream task based on a pre-trained model by fixing some neural network layers or adding a parameter related to a prompt (prompt).

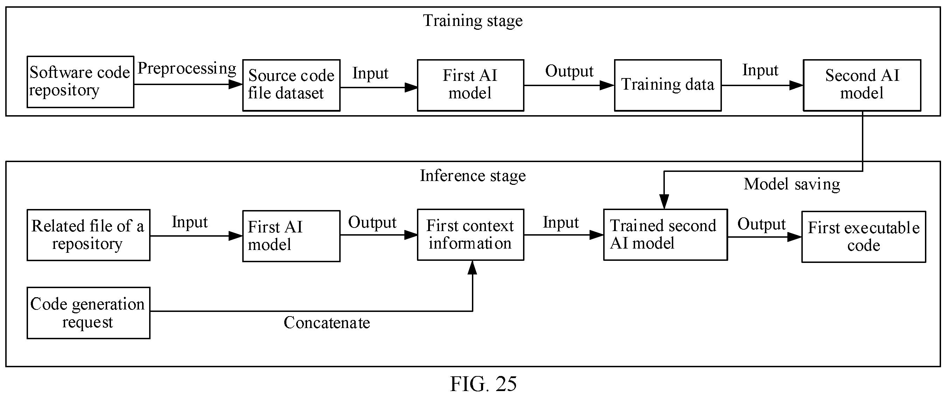

In this embodiment of this application, an operation of obtaining the first context information may be implemented by using a parser, an integrated development environment, or a model. In addition, when the first context information is obtained by using the model, the operation of obtaining the first context information and an operation of generating the first executable code may be implemented by using a same model, or may be implemented by using two models respectively. An example in which a first AI model obtains the first context information from the repository, and a second AI model generates the first executable code based on the first context information is used below to describe an implementation process of this embodiment of this application. As shown in FIG. 25, the implementation process includes a training stage and an inference stage. The second AI model is trained at the training stage. At the inference stage, the first AI model is used to obtain the first context information from the repository, and the second AI model is used to generate the first executable code based on the first context information. The operation of obtaining the second context information from the successfully compiled repository at the training stage may be performed by the first AI model, or may be implemented by an AI model that has a function similar to that of the first AI model. In an implementation, the first AI model may be an existing model like a Code BERT model, or may be a self-trained model, and a training mode may be a self-coding training mode. The second AI model may be a generative pre-trained decoder model or the like. An example in which the first AI model is used for implementation is used below for description.

As shown in FIG. 25, at the training stage, the computing device may obtain a successfully compiled repository from a software code repository, obtain a source code file dataset from the successfully compiled repository, and perform preprocessing such as extraction, sifting, and deduplication on content of the repository in the process. Then, the source code file dataset is input into the first AI model, so that the first AI model performs step 2201 and step 2202 in the training method provided in this embodiment of this application, to obtain training data used for training the second AI model to be trained. Then, the computing device performs step 2203, inputs the training data into the to-be-trained second AI model, and saves a model after the training ends, to obtain a trained second AI model.

As shown in FIG. 25, at the inference stage, after receiving a code generation request from a current repository, the computing device may input a related file of the current repository into the first AI model, so that the first AI model performs step 405 to step 410 in the cloud service-based code generation method provided in embodiments of this application. First context information is obtained from the related file of the current repository by using the first AI model. In addition, after receiving the first context information output by the first AI model, the computing device concatenates the first context information and a task description of the code generation request, and inputs concatenated first context information and task description into the second AI model, so that the second AI model performs step 413 in the cloud service-based code generation method provided in embodiments of this application, to generate the first executable code for implementing the first method. Then, after receiving the first executable code output by the second AI model, the computing device recommends the first executable code to the developer.

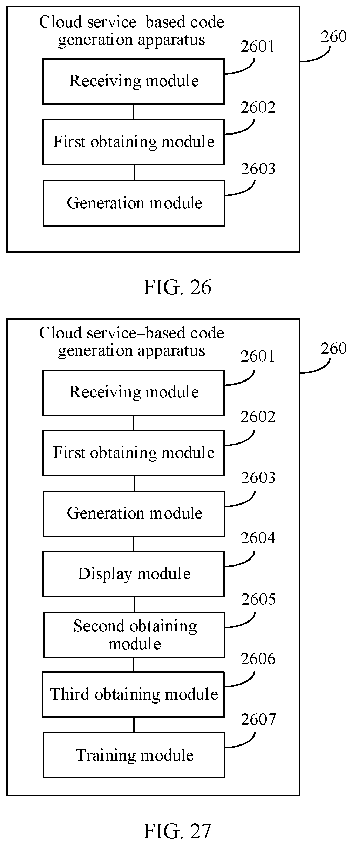

The foregoing describes the cloud service-based code generation method provided in embodiments of this application. Corresponding to the foregoing method, an embodiment of this application further provides a cloud service-based code generation apparatus. FIG. 26 is a diagram of a structure of a cloud service-based code generation apparatus according to an embodiment of this application. Based on the following plurality of modules shown in FIG. 26, the cloud service-based code generation apparatus shown in FIG. 26 can perform all or a part of the operations shown in FIG. 4. It should be understood that the apparatus may include more additional modules than the shown modules, or a part of the shown modules are omitted. This is not limited in this embodiment of this application. Optionally, the cloud service-based code generation apparatus may be disposed on a cloud platform. As shown in FIG. 26, the cloud service-based code generation apparatus 260 includes:
a receiving module 2601, configured to receive a code generation request, where the code generation request is used to request to generate first executable code for implementing a first method in a repository;
a first obtaining module 2602, configured to obtain, from information of the repository based on the code generation request, first context information needed for generating the first executable code; and
a generation module 2603, configured to generate the first executable code based on the first context information and the code generation request.

Optionally, the receiving module 2601 is further configured to receive a scope indication. The scope indication indicates an obtaining scope of the first context information.

Correspondingly, the first obtaining module 2602 is specifically configured to: when the scope indication indicates that the obtaining scope of the first context information is the repository, obtain the first context information from the information of the repository based on the code generation request.

Optionally, the receiving module 2601 is further configured to receive a preview indication. The preview indication indicates whether to preview the first context information.

Correspondingly, as shown in FIG. 27, the cloud service-based code generation apparatus 260 further includes: a display module 2604, configured to: when the preview indication indicates to preview the first context information, display the first context information.

The receiving module 2601 is further configured to receive an accept indication indicating that the first context information is accepted.

The generation module 2603 is specifically configured to: after the accept indication is received, generate the first executable code based on the first context information and the code generation request.

Optionally, the first obtaining module 2602 is specifically configured to: obtain, from a file of the repository based on the code generation request, a source code file to which the first method belongs; obtain, from the information of the repository, external information that is used by the source code file and that is outside the source code file; supplement the external information to the source code file; and obtain the first context information based on a supplemented source code file.

Optionally, the first obtaining module 2602 is specifically configured to: obtain, from the information of the repository, a permission scope in which the first method has permission for access; and obtain the external information within the permission scope.

Optionally, the first obtaining module 2602 is specifically configured to obtain the permission scope based on at least one of a location of the first method in the repository, access control permission of a target class to which the first method belongs, and a hierarchy and a reference relationship that are of the target class.

Optionally, the first obtaining module 2602 is further configured to remove target information from the first context information to obtain updated first context information. The target information includes one or more of the following: a code comment, a variable assignment, a method body, and information indicating code underlying logic.

Optionally, the receiving module 2601 is further configured to receive a removal indication. The removal indication indicates whether to remove the target information from the first context information.

Correspondingly, the first obtaining module 2602 is specifically configured to: when the removal indication indicates to remove the target information from the first context information, remove the target information from the first context information to obtain updated first context information.

Optionally, the first obtaining module 2602 is further configured to abstract the first context information as an interface declaration form, to obtain the updated first context information.

Optionally, the first obtaining module 2602 is specifically configured to: obtain, from a file of the repository based on the code generation request, a source code file to which the first method belongs; obtain, from the source code file, following information whose writing location is posterior to the first method; adjust the writing location of the following information to be prior to the first method, so that the following information becomes preceding information of the first method after the location adjustment; and obtain the first context information based on the preceding information of the first method.

Optionally, the first obtaining module 2602 is further configured to: obtain correlation between multiple pieces of content in the first context information and the first method; and sort the multiple pieces of content based on the correlation corresponding to the multiple pieces of content, to obtain the updated first context information.

Optionally, the first obtaining module 2602 is specifically configured to arrange the multiple pieces of content to be prior to a task description of the first method, where a distance between any piece of content and the task description is inversely correlated with the correlation corresponding to the content.

Optionally, the obtaining correlation between multiple pieces of content in the first context information and the first method includes one or a combination of the following: obtaining a first similarity between an identifier of each piece of content and related information of the first method, where the first similarity is positively correlated with the correlation; obtaining a distance between each piece of content and a hierarchy of the first method in the repository, where the distance is inversely correlated with the correlation; and obtaining a second similarity between each piece of content and context information invoked by associated content of the first method, where the second similarity is positively correlated with the correlation, and the associated content of the first method includes one or more of the following: an association class of the target class to which the first method belongs, and another method in the target class.

Optionally, the identifier includes one or more of the following: a variable name, a method name, a package name, a class name, and a constant name.

Optionally, the related information includes one or more of the following: a method description, a method name, a return type, and a parameter type.

Optionally, the first obtaining module 2602 is further configured to generate a logical structure diagram of the repository. The logical structure diagram indicates an association relationship between content in the repository.

Correspondingly, the first obtaining module 2602 is specifically configured to: analyze the logical structure diagram based on the code generation request, and obtain, from the information of the repository, the first context information needed for generating the first executable code.

Optionally, the generation module 2603 is specifically configured to input the first context information and the code generation request into a pre-trained model, to obtain the first executable code output by the pre-trained model.

Optionally, as shown in FIG. 27, the cloud service-based code generation apparatus 260 further includes:
a second obtaining module 2605, configured to obtain second executable code for implementing a second method in a successfully compiled repository;
a third obtaining module 2606, configured to obtain second context information of the second executable code; and
a training module 2607, configured to train a to-be-trained model by using the second context information as an input of the to-be-trained model and using the second executable code as an expected output of the to-be-trained model, to obtain the pre-trained model.

Optionally, the input of the to-be-trained model further includes one or more of the following: a method comment and a method signature that are of the second method.

Optionally, the second obtaining module 2605 is specifically configured to: obtain all second methods in the successfully compiled repository; sift all the second methods to obtain a sifted second method, where the sifted second method is used to express arithmetic logic; and obtain second executable code for implementing the sifted second method.

Optionally, a second method that fails to pass the sifting has one or more of the following features: a method body of the second method is empty, the second method has a special purpose, and the method body of the second method does not include an operation expression.

Optionally, the special purpose includes one or more of the following: obtaining, setting, constructing, and returning.

Optionally, the context information includes one or more of the following: a class, functions of a variable and a method, access permission, and an invocation manner that are defined.

In the cloud service-based code generation apparatus provided in this embodiment of this application, after the code generation request is received, the first context information needed for generating the first executable code can be obtained from the information of the repository based on the code generation request. Then, the first executable code is generated based on the first context information and the code generation request. In the cloud service-based code generation method, the first context information needed for generating the first executable code needs to be first obtained from the information of the repository. The first context information includes repository-level context information from the entire repository, and can reflect logical structure diagrams of code and the repository. In this way, more background knowledge needed by human developers during actual programming and more overall logic of the repository can be used in a code generation process. Therefore, a code generation capability is improved. This helps improve actual use experience of a code generation technology.

The receiving module 2601, the first obtaining module 2602, the generation module 2603, the display module 2604, the second obtaining module 2605, the third obtaining module 2606, and the training module 2607 may all be implemented by using software, or may be implemented by using hardware. For example, the following describes an implementation of the receiving module 2601 by using the receiving module 2601 as an example. Similarly, for implementations of the first obtaining module 2602, the generation module 2603, the display module 2604, the second obtaining module 2605, the third obtaining module 2606, and the training module 2607, refer to the implementation of the receiving module 2601.

The module is used as an example of a software functional unit, and the receiving module 2601 may include code run on a computing instance. The computing instance may include at least one of a physical host (computing device), a virtual machine, and a container. Further, there may be one or more computing instances. For example, the receiving module 2601 may include code run on multiple hosts/virtual machines/containers. It should be noted that, the multiple hosts/virtual machines/containers configured to run the code may be distributed in a same region (region), or may be distributed in different regions. Further, the multiple hosts/virtual machines/containers configured to run the code may be distributed in a same availability zone (availability zone, AZ), or may be distributed in different AZs. Each AZ includes one data center or multiple data centers that are geographically close to each other. One region may usually include multiple AZs.

Similarly, the multiple hosts/virtual machines/containers configured to run the code may be distributed in a same virtual private cloud (virtual private cloud, VPC), or may be distributed in multiple VPCs. Usually, one VPC is disposed in one region. A communication gateway needs to be disposed in each VPC for communication between two VPCs in a same region or cross-region communication between VPCs in different regions. Interconnection between VPCs is implemented through the communication gateway.

The module is used as an example of a hardware functional unit, and the receiving module 2601 may include at least one computing device, for example, a server. Alternatively, the receiving module 2601 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the receiving module 2601 may be distributed in a same region, or may be distributed in different regions. The plurality of computing devices included in the receiving module 2601 may be distributed in a same AZ, or may be distributed in different AZs. Similarly, the multiple computing devices included in the receiving module 2601 may be distributed in a same VPC, or may be distributed in multiple VPCs. The plurality of computing devices may be any combination of computing devices such as the server, the ASIC, the PLD, the CPLD, the FPGA, and the GAL.

It should be noted that in another embodiment, any one of the receiving module 2601, the first obtaining module 2602, the generation module 2603, the display module 2604, the second obtaining module 2605, the third obtaining module 2606, and the training module 2607 may be configured to perform any step in the cloud service-based code generation method. Steps implemented by the receiving module 2601, the first obtaining module 2602, the generation module 2603, the display module 2604, the second obtaining module 2605, the third obtaining module 2606, and the training module 2607 may be specified based on a requirement. The receiving module 2601, the first obtaining module 2602, the generation module 2603, the display module 2604, the second obtaining module 2605, the third obtaining module 2606, and the training module 2607 separately implement different steps in the cloud service-based code generation method, to implement all functions of the cloud service-based code generation apparatus.

It can be clearly understood by a person skilled in the art that, for the purpose of convenient and brief description, for detailed working processes of the foregoing apparatus and modules, refer to corresponding content in the foregoing method embodiment. Details are not described herein again.

All or a part of the foregoing embodiments may be implemented by using software, hardware, firmware, or any combination thereof. When the software is used for implementation, all or a part of embodiments may be implemented in a form of computer program product. A computer program product that provides a program development platform includes one or more computer instructions. When the computer program instructions are loaded and executed on a computing device, all or a part of the functions of the cloud service-based code generation method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide the program development platform.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of the at least one computing device included in the computing device cluster, refer to the computing device 100 shown in FIG. 1. A memory 102 of one or more computing devices 100 in the computing device cluster may store same instructions for performing a cloud service-based code generation method.

In some possible implementations, the memory 102 of one or more computing devices 100 in the computing device cluster may alternatively separately store a part of the instructions for performing the cloud service-based code generation method. In other words, a combination of the one or more computing devices 100 may jointly execute the instructions for performing the cloud service-based code generation method.

It should be noted that the memories 102 of different computing devices 100 in the computing device cluster may store different instructions, which are respectively used to perform a part of functions of a cloud service-based code generation apparatus. That is, the instructions stored in the memories 102 of the different computing devices 100 may implement functions of one or more of the receiving module 2601, the first obtaining module 2602, the generation module 2603, the display module 2604, the second obtaining module 2605, the third obtaining module 2606, and the training module 2607.

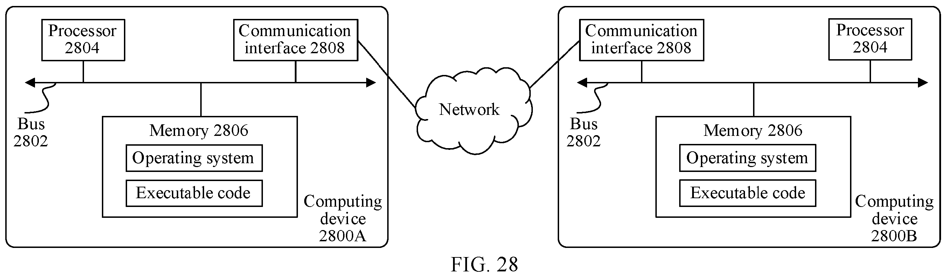

In some possible implementations, the one or more computing devices in the computing device cluster may be connected through a network. The network may be a wide area network, a local area network, or the like. FIG. 28 shows a possible implementation. As shown in FIG. 28, two computing devices 2800A and 2800B are connected through a network. Specifically, each computing device is connected to the network through a communication interface of the computing device. In this possible implementation, the computing devices 2800A and 2800B include buses 2802, processors 2804, memories 2806, and communication interfaces 2808. The memory 2806 in the computing device 2800A stores instructions for performing functions of the receiving module 2601, the first obtaining module 2602, the generation module 2603, and the display module 2604. In addition, the memory 2806 in the computing device 2800B stores instructions for performing functions of the second obtaining module 2605, the third obtaining module 2606, and the training module 2607.

It should be understood that a function of the computing device 2800A shown in FIG. 28 may alternatively be implemented by multiple computing devices 2800. Similarly, a function of the computing device 2800B may alternatively be implemented by multiple computing devices 2800. In addition, a deployment manner of the modules configured to implement the cloud service-based code generation method in the computing device may also be adjusted based on an application requirement.

An embodiment of this application further provides a computer-readable storage medium. The computer-readable storage medium is a non-volatile computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the cloud service-based code generation method provided in embodiments of this application.

An embodiment of this application further provides a computer program product including instructions. The computer program product may be software or a program product that includes instructions and that can run on a computing device or be stored in any usable medium. When the computer program product runs on at least one computing device, a computer is enabled to implement the cloud service-based code generation method provided in embodiments of this application.

An embodiment of this application further provides a chip, including a processor, configured to invoke, from a memory, and run instructions stored in the memory, so that a computing device in which the chip is mounted performs the cloud service-based code generation method provided in embodiments of this application.

All or a part of the foregoing embodiments may be implemented by using software, hardware, firmware, or any combination thereof. When the software is used for implementation, all or a part of embodiments may be implemented in a form of computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk), or the like.

To clearly describe interchangeability of hardware and software, the steps and composition of embodiments have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code for implementing the method in embodiments of this application may be written in one or more programming languages. The computer program code may be provided for a processor of a general-purpose computer, a dedicated computer, or another programmable rule search apparatus, so that when the program code is executed by the computer or the another programmable rule search apparatus, functions/operations specified in the flowcharts and/or block diagrams are implemented. The program code may be executed entirely on a computer, executed partially on a computer, executed as an independent software package, executed partially on a computer and partially on a remote computer, or executed entirely on a remote computer or a server.

In the context of embodiments of this application, computer program code or related data may be carried in any proper carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or a propagated signal in another form, for example, a carrier wave or an infrared signal.

It can be clearly understood by a person skilled in the art that, for the purpose of convenient and brief description, for detailed working processes of the foregoing system, device, and module, refer to corresponding processes in the foregoing method embodiment. Details are not described herein again.

In the several embodiments provided in this application, it should be understood that the disclosed system, device, and method may be implemented in other manners. For example, the described device embodiment is merely an example. For example, the module division is merely logical function division and may be other division during actual implementation. For example, multiple modules or components may be combined or integrated into another system, or some features may be ignored or not performed. In addition, the displayed or discussed mutual couplings or direct couplings or communication connections may be indirect couplings or communication connections implemented through some interfaces, devices, or modules, or may be electrical, mechanical, or other forms of connection.

The modules described as separate components may or may not be physically separate, and components displayed as modules may or may not be physical modules, in other words, may be located in one place or may be distributed on multiple network modules. Some or all of the modules may be selected based on actual requirements to implement the objectives of the solutions of embodiments of this application.

In addition, the functional modules in embodiments of this application may be integrated into one processing module, or each of the modules may exist alone physically, or two or more modules may be integrated into one module. The integrated module may be implemented in a form of hardware, or may be implemented in a form of software functional module.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of the various examples, a first link may be referred to as a second link, and similarly, the second link may be referred to as the first link.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "multiple" in this application means two or more. For example, multiple second packets means two or more second packets. The terms "system" and "network" are often used interchangeably in this specification.

It should be understood that the terms used in the descriptions of various examples in this specification are merely intended to describe specific examples but are not intended to constitute a limitation. The terms "one" ("a" or "an") and "the" of singular forms used in the descriptions of the various examples and the appended claims are also intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, but does not exclude presence or addition of one or more other features, integers, steps, operations, elements, components, and/or their components.

It should be further understood that, depending on the context, the phrase "if it is determined..." or "if [the stated condition or event] is detected" may be interpreted as a meaning of "when it is determined that..." or "in response to determining..." or "when (the stated condition or event) is detected" or "in response to detecting (the stated condition or event)".

It should be understood that determining B based on A does not mean that B is determined based only on A, and B may alternatively be determined based on A and/or other information.

It should be further understood that "one embodiment", "an embodiment", and "a possible implementation" mentioned throughout the specification mean that a specific feature, structure, or characteristic related to the embodiment or the implementation is included in at least one embodiment of this application. Therefore, "in one embodiment" or "in an embodiment" or "a possible implementation" appearing throughout the specification may not necessarily refer to a same embodiment. In addition, these specific features, structures, or characteristics may be combined in one or more embodiments in any proper manner.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the information, the instructions, and the like in this application are all obtained in a case of full authorization.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A cloud service-based code generation method, wherein the method is performed by a cloud platform, and comprises:
receiving a code generation request, wherein the code generation request is used to request to generate first executable code for implementing a first method in a repository;
obtaining, from information of the repository based on the code generation request, first context information needed for generating the first executable code; and
generating the first executable code based on the first context information and the code generation request.

2. The method according to claim 1, wherein the method further comprises:
receiving a scope indication, wherein the scope indication indicates an obtaining scope of the first context information; and
the obtaining, from information of the repository based on the code generation request, first context information needed for generating the first executable code comprises:
when the scope indication indicates that the obtaining scope of the first context information is the repository, obtaining the first context information from the information of the repository based on the code generation request.

3. The method according to claim 1 or 2, wherein the method further comprises:
receiving a preview indication, wherein the preview indication indicates whether to preview the first context information;
when the preview indication indicates to preview the first context information, displaying the first context information;
receiving an accept indication indicating that the first context information is accepted; and
the generating the first executable code based on the first context information and the code generation request comprises:
after receiving the accept indication, generating the first executable code based on the first context information and the code generation request.

4. The method according to any one of claims 1 to 3, wherein the obtaining, from information of the repository based on the code generation request, first context information needed for generating the first executable code comprises:
obtaining, from a file of the repository based on the code generation request, a source code file to which the first method belongs;
obtaining, from the information of the repository, external information that is used by the source code file and that is outside the source code file;
supplementing the external information to the source code file; and
obtaining the first context information based on a supplemented source code file.

5. The method according to claim 4, wherein the method further comprises:
obtaining, from the information of the repository, a permission scope in which the first method has permission for access; and
the obtaining, from the information of the repository, external information that is used by the source code file and that is outside the source code file comprises:
obtaining the external information within the permission scope.

6. The method according to claim 5, wherein the obtaining, from the information of the repository, a permission scope in which the first method has permission for access comprises:
obtaining the permission scope based on at least one of a location of the first method in the repository, access control permission of a target class to which the first method belongs, and a hierarchy and a reference relationship that are of the target class.

7. The method according to any one of claims 1 to 6, wherein before the generating the first executable code based on the first context information and the code generation request, the method further comprises:
removing target information from the first context information to obtain updated first context information, wherein the target information comprises one or more of the following: a code comment, a variable assignment, a method body, and information indicating code underlying logic.

8. The method according to claim 7, wherein the method further comprises:
receiving a removal indication, wherein the removal indication indicates whether to remove the target information from the first context information; and
the removing target information from the first context information to obtain updated first context information comprises:
when the removal indication indicates to remove the target information from the first context information, removing the target information from the first context information to obtain the updated first context information.

9. The method according to any one of claims 1 to 8, wherein before the generating the first executable code based on the first context information and the code generation request, the method further comprises:
abstracting the first context information as an interface declaration form, to obtain the updated first context information.

10. The method according to any one of claims 1 to 9, wherein the obtaining, from information of the repository based on the code generation request, first context information needed for generating the first executable code comprises:
obtaining, from a file of the repository based on the code generation request, a source code file to which the first method belongs;
obtaining, from the source code file, following information whose writing location is posterior to the first method;
adjusting the writing location of the following information to be prior to the first method, so that the following information becomes preceding information of the first method after the location adjustment; and
obtaining the first context information based on the preceding information of the first method.

11. The method according to any one of claims 1 to 10, wherein before the generating the first executable code based on the first context information and the code generation request, the method further comprises:
obtaining correlation between multiple pieces of content in the first context information and the first method; and
sorting the multiple pieces of content based on the correlation corresponding to the multiple pieces of content, to obtain the updated first context information.

12. The method according to claim 11, wherein the sorting the multiple pieces of content based on the correlation corresponding to the multiple pieces of content comprises:
arranging the multiple pieces of content to be prior to a task description of the first method, wherein a distance between any piece of content and the task description is inversely correlated with the correlation corresponding to the content.

13. The method according to claim 11 or 12, wherein the obtaining correlation between multiple pieces of content in the first context information and the first method comprises one or a combination of the following:
obtaining a first similarity between an identifier of each piece of content and related information of the first method, wherein the first similarity is positively correlated with the correlation;
obtaining a distance between each piece of content and a hierarchy of the first method in the repository, wherein the distance is inversely correlated with the correlation; and
obtaining a second similarity between each piece of content and context information invoked by associated content of the first method, wherein the second similarity is positively correlated with the correlation, and the associated content of the first method comprises one or more of the following: an association class of the target class to which the first method belongs, and another method in the target class.

14. The method according to claim 13, wherein the identifier comprises one or more of the following: a variable name, a method name, a package name, a class name, and a constant name.

15. The method according to claim 13, wherein the related information comprises one or more of the following: a method description, a method name, a return type, and a parameter type.

16. The method according to any one of claims 1 to 15, wherein before the obtaining, from information of the repository based on the code generation request, first context information needed for generating the first executable code, the method further comprises:
generating a logical structure diagram of the repository, wherein the logical structure diagram indicates an association relationship between content in the repository; and
the obtaining, from information of the repository based on the code generation request, first context information needed for generating the first executable code comprises:
analyzing the logical structure diagram based on the code generation request, and obtaining, from the information of the repository, the first context information needed for generating the first executable code.

17. The method according to any one of claims 1 to 16, wherein the generating the first executable code based on the first context information and the code generation request comprises:
inputting the first context information and the code generation request into a pre-trained model, to obtain the first executable code output by the pre-trained model.

18. The method according to claim 17, wherein before the generating the first executable code based on the first context information and the code generation request, the method further comprises:
obtaining second executable code for implementing a second method in a successfully compiled repository;
obtaining second context information of the second executable code; and
training a to-be-trained model by using the second context information as an input of the to-be-trained model and using the second executable code as an expected output of the to-be-trained model, to obtain the pre-trained model.

19. The method according to claim 18, wherein the input of the to-be-trained model further comprises one or more of the following: a method comment and a method signature that are of the second method.

20. The method according to claim 18, wherein the obtaining second executable code for implementing a second method in a successfully compiled repository comprises:
obtaining all second methods in the successfully compiled repository;
sifting all the second methods to obtain a sifted second method, wherein the sifted second method is used to express arithmetic logic; and
obtaining second executable code for implementing the sifted second method.

21. The method according to claim 20, wherein a second method that fails to pass the sifting has one or more of the following features: a method body of the second method is empty, the second method has a special purpose, and the method body of the second method does not comprise an operation expression.

22. The method according to claim 21, wherein the special purpose comprises one or more of the following: obtaining, setting, constructing, and returning.

23. The method according to any one of claims 1 to 22, wherein the context information comprises one or more of the following: a class, functions of a variable and a method, access permission, and an invocation manner that are defined.

24. A cloud service-based code generation apparatus, wherein the apparatus is disposed on a cloud platform, and comprises:
a receiving module, configured to receive a code generation request, wherein the code generation request is used to request to generate first executable code for implementing a first method in a repository;
a first obtaining module, configured to obtain, from information of the repository based on the code generation request, first context information needed for generating the first executable code; and
a generation module, configured to generate the first executable code based on the first context information and the code generation request.

25. The apparatus according to claim 24, wherein
the receiving module is further configured to receive a scope indication, wherein the scope indication indicates an obtaining scope of the first context information; and
the first obtaining module is specifically configured to: when the scope indication indicates that the obtaining scope of the first context information is the repository, obtain the first context information from the information of the repository based on the code generation request.

26. The apparatus according to claim 24 or 25, wherein
the receiving module is further configured to receive a preview indication, wherein the preview indication indicates whether to preview the first context information;
the apparatus further comprises a display module, configured to: when the preview indication indicates to preview the first context information, display the first context information;
the receiving module is further configured to receive an accept indication indicating that the first context information is accepted; and
the generation module is specifically configured to: after the accept indication is received, generate the first executable code based on the first context information and the code generation request.

27. The apparatus according to any one of claims 24 to 26, wherein the first obtaining module is specifically configured to:
obtain, from a file of the repository based on the code generation request, a source code file to which the first method belongs;
obtain, from the information of the repository, external information that is used by the source code file and that is outside the source code file;
supplement the external information to the source code file; and
obtain the first context information based on a supplemented source code file.

28. The apparatus according to claim 27, wherein the first obtaining module is specifically configured to:
obtain, from the information of the repository, a permission scope in which the first method has permission for access; and
obtain the external information within the permission scope.

29. The apparatus according to claim 28, wherein the first obtaining module is specifically configured to:
obtain the permission scope based on at least one of a location of the first method in the repository, access control permission of a target class to which the first method belongs, and a hierarchy and a reference relationship that are of the target class.

30. The apparatus according to any one of claims 24 to 29, wherein
the first obtaining module is further configured to remove target information from the first context information to obtain updated first context information, wherein the target information comprises one or more of the following: a code comment, a variable assignment, a method body, and information indicating code underlying logic.

31. The apparatus according to claim 30, wherein
the receiving module is further configured to receive a removal indication, wherein the removal indication indicates whether to remove the target information from the first context information; and
the first obtaining module is specifically configured to: when the removal indication indicates to remove the target information from the first context information, remove the target information from the first context information to obtain the updated first context information.

32. The apparatus according to any one of claims 24 to 31, wherein
the first obtaining module is further configured to abstract the first context information as an interface declaration form, to obtain the updated first context information.

33. The apparatus according to any one of claims 24 to 32, wherein the first obtaining module is specifically configured to:
obtain, from a file of the repository based on the code generation request, a source code file to which the first method belongs;
obtain, from the source code file, following information whose writing location is posterior to the first method;
adjust the writing location of the following information to be prior to the first method, so that the following information becomes preceding information of the first method after the location adjustment; and
obtain the first context information based on the preceding information of the first method.

34. The apparatus according to any one of claims 24 to 33, wherein the first obtaining module is further configured to:
obtain correlation between multiple pieces of content in the first context information and the first method; and
sort the multiple pieces of content based on the correlation corresponding to the multiple pieces of content, to obtain the updated first context information.

35. The apparatus according to claim 34, wherein
the first obtaining module is specifically configured to arrange the multiple pieces of content to be prior to a task description of the first method, wherein a distance between any piece of content and the task description is inversely correlated with the correlation corresponding to the content.

36. The apparatus according to claim 34 or 35, wherein the obtaining correlation between multiple pieces of content in the first context information and the first method comprises one or a combination of the following:
obtaining a first similarity between an identifier of each piece of content and related information of the first method, wherein the first similarity is positively correlated with the correlation;
obtaining a distance between each piece of content and a hierarchy of the first method in the repository, wherein the distance is inversely correlated with the correlation; and
obtaining a second similarity between each piece of content and context information invoked by associated content of the first method, wherein the second similarity is positively correlated with the correlation, and the associated content of the first method comprises one or more of the following: an association class of the target class to which the first method belongs, and another method in the target class.

37. The apparatus according to claim 36, wherein the identifier comprises one or more of the following: a variable name, a method name, a package name, a class name, and a constant name.

38. The apparatus according to claim 36, wherein the related information comprises one or more of the following: a method description, a method name, a return type, and a parameter type.

39. The apparatus according to any one of claims 24 to 38, wherein
the first obtaining module is further configured to generate a logical structure diagram of the repository, wherein the logical structure diagram indicates an association relationship between content in the repository; and
the first obtaining module is specifically configured to: analyze the logical structure diagram based on the code generation request, and obtain, from the information of the repository, the first context information needed for generating the first executable code.

40. The apparatus according to any one of claims 24 to 39, wherein
the generation module is specifically configured to input the first context information and the code generation request into a pre-trained model, to obtain the first executable code output by the pre-trained model.

41. The apparatus according to claim 40, wherein the apparatus further comprises:
a second obtaining module, configured to obtain second executable code for implementing a second method in a successfully compiled repository;
a third obtaining module, configured to obtain second context information of the second executable code; and
a training module, configured to train a to-be-trained model by using the second context information as an input of the to-be-trained model and using the second executable code as an expected output of the to-be-trained model, to obtain the pre-trained model.

42. The apparatus according to claim 41, wherein the input of the to-be-trained model further comprises one or more of the following: a method comment and a method signature that are of the second method.

43. The apparatus according to claim 41, wherein the second obtaining module is specifically configured to:
obtain all second methods in the successfully compiled repository;
sift all the second methods to obtain a sifted second method, wherein the sifted second method is used to express arithmetic logic; and
obtain second executable code for implementing the sifted second method.

44. The apparatus according to claim 43, wherein a second method that fails to pass the sifting has one or more of the following features: a method body of the second method is empty, the second method has a special purpose, and the method body of the second method does not comprise an operation expression.

45. The apparatus according to claim 44, wherein the special purpose comprises one or more of the following: obtaining, setting, constructing, and returning.

46. The apparatus according to any one of claims 24 to 45, wherein the context information comprises one or more of the following: a class, functions of a variable and a method, access permission, and an invocation manner that are defined.

47. A computing device cluster, comprising at least one computing device, wherein each computing device comprises a processor and a memory, and the processor of the at least one computing device is configured to execute instructions stored in the memory of the at least one computing device, to enable the computing device cluster to perform the method according to any one of claims 1 to 23.

48. A computer program product comprising instructions, wherein when the instructions are run by a computing device cluster, the computing device cluster is enabled to perform the method according to any one of claims 1 to 23.

49. A computer-readable storage medium, comprising computer program instructions, wherein when the computer program instructions are executed by a computing device cluster, the computing device cluster performs the method according to any one of claims 1 to 23.
